# EUROPEAN PATENT APPLICATION

(11) **EP 4 535 462 A1**
(43) Date of publication of application: **09.04.2025**
(21) Application number: 23923210.1
(22) Date of filing: 06.11.2023
(51) Int. Cl.: H01M 4/36, H01M 4/62, H01M 4/58, H01M 10/0525, H01M 4/136

(54) **POSITIVE ELECTRODE MATERIAL AND PREPARATION METHOD THEREFOR, POSITIVE ELECTRODE SHEET, AND SECONDARY BATTERY**

(30) Priority: 18.08.2023 CN 202311049485; 18.08.2023 CN 202311049489
(71) Applicant: Shenzhen Dynanonic Co., Ltd., Shenzhen, Guangdong 518000 (CN)
(72) Inventor: XU, Rongyi, Shenzhen, Guangdong 518000 (CN); ZENG, Shaohong, Shenzhen, Guangdong 518000 (CN); KONG, Lingyong, Shenzhen, Guangdong 518000 (CN); LI, Yineng, Shenzhen, Guangdong 518000 (CN)
(74) Representative: Petraz, Gilberto Luigi
(86) International application number: PCT/CN2023/129924
(87) International publication number: WO 2025/039376

(57) **Abstract**

The present application provides a cathode material, a preparation method thereof, a cathode plate, and a secondary battery. The cathode material includes a core and a first carbon layer. The first carbon layer is a multi-carbon intercalated layer, the multi-carbon intercalated layer includes a main skeleton carbon and a modified carbon, the main skeleton carbon is bonded to a surface of the core, and the modified carbon grows within the main skeleton carbon in an intercalated manner. The multi-carbon intercalated layer is adopted to coat the core. The multi-carbon intercalated layer includes the main skeleton carbon and the modified carbon. The main skeleton carbon is bonded to the surface of the core, and the modified carbon grows within the main skeleton carbon in an intercalated manner. In this way, the generation of pores is reduced, making the porosity of the multi-carbon intercalated layer lower than the porosity of the existing in-situ carbon coating layer. The pore structure in the multi-carbon intercalated layer is reduced, such that the time for the solvent to infiltrate the pores during the slurry preparation process is shortened, and the volume of solvent required to infiltrate the pores is reduced. This is beneficial to reduce the generation of slurry bubbles, making it easy to prepare a slurry with good rheology and uniformity, thereby reducing a series of problems caused by bubbles and improving the energy density per unit electrode plate.

## Description

This application claims priority to the Chinese patent application No. 202311049485.9, filed Aug. 18, 2023, titled "CATHODE MATERIAL, PREPARATION METHOD THEREOF, CATHODE PLATE, AND SECONDARY BATTERY".

This application further claims priority to the Chinese patent application No. 202311049489.7, filed Aug. 18, 2023, titled "CARBON-COATED CATHODE MATERIAL, PREPARATION METHOD THEREOF, CATHODE PLATE, AND SECONDARY BATTERY".

The entire contents of all the aforementioned applications are incorporated herein by reference.

### TECHNICAL FIELD

The present application relates to the technical field of lithium-ion battery cathode materials, more particularly to a cathode material, a preparation method thereof, a cathode plate, and a secondary battery.

### BACKGROUND

With the deteriorating global environmental pollution and the depletion of energy resources, it is urgent to seek renewable new energy. Lithium-ion batteries, characterized in their high energy density, good safety, no memory effect, and long cycle life, have become the mainstream in the global new energy electric vehicle market in recent years. The cathode material is one of the key materials determining the performance of lithium-ion batteries. Lithium manganese iron phosphate (LMFP), as an upgraded version of lithium iron phosphate (LFP), can increase energy density by about 20% and has better low-temperature performance. Compared with ternary cathode materials, LMFP is cheaper and safer. However, like LFP, LMFP has the defect of low electronic conductivity. To address this issue, optimized synthesis methods, post-synthesis modifications such as nanostructuring and carbon coating, are commonly used to improve the performance of LMFP.

Due to the lower electronic conductivity of LMFP compared to LFP, LMFP needs to be prepared into smaller nanoparticles to fully exert its performance. Additionally, the in-situ carbon coating layer itself is loose and porous, resulting in that the prepared LMFP nanoparticles have higher specific surface areas. However, when the carbon content and pH are similar, the aforementioned LMFP nanoparticles are more difficult to process in full-electrolyte slurry preparation. This is mainly exhibited in that the slurry easily generates more bubbles, after screening the slurry, large bubbles tend to burst, but during the coating process, many small bubbles adhere to the electrode plate, and these bubbles burst after drying, leaving pits or forming voids on the electrode plate. This results in uneven thickness of the electrode plate, resulting in numerous fine cracks, peeling, and powder shedding on the electrode plate. These issues affect the yield rate of the electrode plate and ultimately lead to deterioration in the capacity, internal resistance, cycle life, and safety of the battery. This severely impacts the full-electrolyte performance evaluation of LMFP. Efforts to reduce viscosity by increasing the dosages of the binder and the solvent or reducing the solid content, or by extending the vacuum low-speed stirring duration for de-foaming are not ideal and lead to increased economic and time costs.

### TECHNICAL PROBLEMS

It is an objective of the present application to overcome the aforementioned deficiencies of the existing technology and provide a cathode material, a preparation method thereof, a cathode plate, and a secondary battery to address the technical issues of difficulty in processing LMFP nanoparticles in the full-electrolyte slurry preparation, which leads to deterioration in the capacity, internal resistance, cycle life, and safety of the battery.

### TECHNICAL SOLUTIONS

To achieve the above objective, the following technical solutions are adopted in the present application.

A first aspect of the present application provides a cathode material. The cathode material comprises a core and a first carbon layer. The first carbon layer is a multi-carbon intercalated layer, the multi-carbon intercalated layer comprises a main skeleton carbon and a modified carbon, the main skeleton carbon is bonded to a surface of the core, and the modified carbon grows within the main skeleton carbon in an intercalated manner.

Optionally, carbon in the main skeleton carbon is bonded to the surface of the core in a form of stacked carbon flakes; and/or,
carbon in the modified carbon is intercalated into the main skeleton carbon in a form of carbon flakes; and/or,
a mass content of the main skeleton carbon accounts for 80 wt.% to 90 wt.% of the multi-carbon intercalated layer, and a mass content of the modified carbon accounts for 10 wt.% to 20 wt.% of the multi-carbon intercalated layer.

Optionally, a length of each of the carbon flakes in the main skeleton carbon is greater than a length of each of the carbon flakes in the modified carbon, with the length of each of the carbon flakes in the modified carbon being smaller than 2 nm; and/or,
a pore volume of the multi-carbon intercalated layer is smaller than 0.070 cm³/g; and/or,
a thickness of the multi-carbon intercalated layer is smaller than 10 nm; and/or,
an I_{G}/I_{D} value of the first carbon layer is 0.75 to 1.5.

Optionally, the multi-carbon intercalated layer comprises a carbon element and a first non-carbon element;
the first non-carbon element comprises at least one of N, S, P, or Li; and/or,
a mass content of the carbon element accounts for 97 wt.% to 98.5 wt.% of the first carbon layer, and a mass content of the first non-carbon element accounts for 1.5 wt.% to 3 wt.% of the first carbon layer.

Optionally, the cathode material further comprises a second carbon layer, the second carbon layer is an outer carbon layer, which is coated on an outer surface of the multi-carbon intercalated layer.

Optionally, a pore volume of the outer carbon layer is smaller than 0.020 cm³/g; and/or,
a thickness of the outer carbon layer is smaller than 1.5 nm, and the thickness of the outer carbon layer is smaller than a thickness of the multi-carbon intercalated layer.

Optionally, a degree of graphitization of the second carbon layer is higher than a degree of graphitization of the first carbon layer.

Optionally, a degree of long-range disorder of a carbon structure in the first carbon layer is higher than a degree of long-range disorder of a carbon structure in the second carbon layer.

Optionally, most of the carbon structure in the first carbon layer is a longer carbon flake structure, which is stacked on the surface of the core. Most of the carbon structure in the second carbon layer is a shorter carbon flake structure, which is stacked on a surface of the first carbon layer in a discontinuous and anisotropic manner. A size of the longer carbon flake structure is greater than a size of the shorter carbon flake structure.

Optionally, the second carbon layer comprises a carbon element and a second non-carbon element. The second non-carbon element comprises at least one of N, P, or Li; and/or, a mass content of the carbon element accounts for 98 wt.% to 99 wt.% of the second carbon layer, and a mass content of the second non-carbon element accounts for 1 wt.% to 2 wt.% of the second carbon layer.

Optionally, an I_{G}/I_{D} value of the second carbon layer is 1.0 to 1.9.

Optionally, the core contains phosphorus, and a portion of the phosphorus in the core forms C-P bonds and/or C-O-P bonds with a portion of the carbon in the multi-carbon intercalated layer.

Optionally, a bonding probability of the C-P bonds and C-O-P bonds is 0.5% to 1.15%.

Optionally, the core is a lithium-containing phosphate-based cathode active material core; and/or,
a particle size of the core is smaller than 400 nm.

Optionally, a total pore volume of the cathode material is 0.04 cm³/g to 0.10 cm³/g; and/or,
a specific surface area of the cathode material is 12.0 m²/g to 17.0 m²/g; and/or,
an I_{G}/I_{D} value of the cathode material is 0.8 to 1.25.

A second aspect of the present application provides a preparation method of a cathode material. The preparation method is used for preparing the above cathode material. The preparation method comprises the following steps:
providing a core precursor material, performing a first sintering on the core precursor material in an inert atmosphere to obtain the core;
mixing the core with a first carbon source and a solvent for carbon source to obtain a mixed material; and
performing a second sintering on the mixed material in an inert atmosphere, while introducing a second carbon source in an atomized state during the second sintering, so that the first carbon source is pyrolyzed in-situ to form the main skeleton carbon stacked on the surface of the core, the second carbon source is pyrolyzed in-situ to and/or vapor deposited to form the modified carbon, and the modified carbon is interwoven and intercalated into the main skeleton carbon to form the first carbon layer which is the multi-carbon intercalated layer, whereby obtaining the cathode material.

Optionally, the core precursor material is a lithium manganese iron phosphate precursor, and a preparation method of the lithium manganese iron phosphate precursor comprises the following step:
mixing a lithium source, an iron source, a phosphorus source, a manganese source, a solvent for precursor, and a solubilizer in proportion for carrying out reaction, whereby obtaining the lithium manganese iron phosphate precursor.

Optionally, a mixed solution obtained by mixing the lithium source, the iron source, the phosphorus source, the manganese source, the solvent for precursor, and the solubilizer has a pH value of 5.0 to 7.5.

Optionally, the first carbon source comprises at least one of hydroxypropyl distarch phosphate, glucose, fructose, sucrose, lactose, stevia, xylose, maltose, starch, cellulose, chitosan, D-glucosamine, glucosamine sulfate, fructose phosphate ester, glucose-6-phosphate, N-acetylglucosamine, peptidoglycan, polyacrylate, polyethylene glycol, citric acid, malic acid, propylene, polypropylene glycol, polypropylene, polyacrylamide, lithium polyacrylate, polyvinyl alcohol, cyclodextrin, polyvinyl butyral, polystyrene, or graphite; and/or,
the second carbon source comprises at least two of methanol, ethanol, ethyl acetate, polyethylene glycol, acetone, butanone, ethyl ether, acetic acid, oxalic acid, polypropylene glycol, aniline, benzylamine, pyrazine, ammonium citrate, ammonium formate, ammonium acetate, formamide, acetamide, propionamide, butyramide, isopropanolamine, N,N-dimethylethanolamine, dimethylethanolamine, or triethylenediamine.

Optionally, at least one of the first carbon source and the second carbon source comprises a carbon element and a first non-carbon element, the first non-carbon element comprises at least one of N, S, P, or Li, a mass content of the carbon element accounts for 97 wt.% to 98.5 wt.% of a total mass of the first carbon source and the second carbon source, and a mass content of the first non-carbon element accounts for 1.5 wt.% to 3 wt.% of the total mass of the first carbon source and the second carbon source.

Optionally, the cathode material further comprises a second carbon layer, the second carbon layer is an outer carbon layer, and after forming the multi-carbon intercalated layer, the method further comprises the following step:
continuing to introduce the second carbon source in the atomized state after the second carbon source is completely pyrolyzed, so that the second carbon source is pyrolyzed in-situ and/or vapor deposited on a surface of the multi-carbon intercalated layer to form the outer coating carbon layer.

Optionally, the preparation method satisfies at least one of the following conditions (1) to (4):
(1) a temperature of the first sintering is 350°C to 660°C;
(2) a temperature of the second sintering is 650°Cto 855°C;
(3) a flow rate of the second carbon source in the atomized state is 10 mL/min to 120 mL/min; or
(4) a second carbon source comprises a carbon element and a second non-carbon element, where the second non-carbon element comprises at least one of N, P, or Li; a mass content of carbon element accounts for 98 wt.% to 99 wt.% of the second carbon source, and a mass content of the second non-carbon element accounts for 1 wt.% to 2 wt.% of the second carbon source.

A third aspect of the present application provides a cathode plate, being made of the above cathode material or the cathode material prepared by the above method.

A fourth aspect of the present application provides a secondary battery, comprising the above cathode plate.

Advantages of embodiments of the present application are summarized as follows:
The cathode material provided in embodiments of the present application adopts the multi-carbon intercalated layer to coat the core. The multi-carbon intercalated layer comprises the main skeleton carbon and the modified carbon. The main skeleton carbon is bonded to the surface of the core, and the modified carbon grows within the main skeleton carbon in an intercalated manner. In this way, the generation of pores is reduced, making the porosity of the multi-carbon intercalated layer lower than the porosity of the existing in-situ carbon coating layer. The pore structure in the multi-carbon intercalated layer is reduced, such that the time for the solvent to infiltrate the pores during the slurry preparation process is shortened, and the volume of solvent required to infiltrate the pores is reduced. This is beneficial to reduce the generation of slurry bubbles, making it easy to prepare a slurry with good rheology and uniformity, thereby reducing a series of problems caused by bubbles and improving the energy density per unit electrode plate.

The preparation method of the cathode material provided by embodiments of the present application involves a second high-temperature sintering and the introduction of the second carbon source in the atomized state, which allows the first carbon source to be subjected to the high-temperature in-situ pyrolysis to form the main skeleton carbon, and allows the second carbon source to be subjected to in-situ pyrolysis and/or vapor deposition to form the modified carbon. The modified carbon is intertwoven and intercalated in the main skeleton carbon, forming the multi-carbon intercalated layer. This effectively reduces pore generation, resulting in a multi-carbon intercalated layer with much lower porosity, thereby enhancing the electronic conductivity of the cathode material.

The cathode plate provided by embodiments of the present application is made of the above-mentioned cathode material. The cathode material comprises a core, a multi-carbon intercalated layer, and an outer carbon layer. The multi-carbon intercalated layer and the outer carbon layer have low porosities, so that few bubbles are generated in the slurry preparation process, which avoids the problems caused by the bubbles in slurry screening, electrode coating, and electrode drying, and eliminates the problems of uneven electrode thickness, as well as cracks, peeling, and powder shedding of the electrode plate caused by pits or voids due to the bubble bursting, thereby effectively improving the yield rate of cathode plate.

The secondary battery provided by embodiments of the present application comprises the above-mentioned cathode plate, which tackles the issues of uneven thickness, cracks, peeling, and powder shedding, and therefore improves the capacity, internal resistance, cycle life, and safety of the secondary battery.

### BRIEF DESCRIPTION OF THE DRAWINGS

The present application will be further explained in conjunction with the drawings and embodiments hereinbelow. In the drawings:
FIG. 1 is a flow chart of a preparation method of a cathode material according to an embodiment of the present application;
FIG. 2 is a flow chart of a preparation method of a cathode material in Example 1 of the present application;
FIG. 3 is a structural schematic diagram comparing the cathode material of Example 1 and a cathode material of Comparative example 1;
FIG. 4 is a TEM image of the cathode material of Example 1 of the present application;
FIG. 5 is an SEM image of the cathode material of Example 1 of the present application;
FIG. 6 is a pore size distribution diagram of the cathode material in Example 1 of the present application and Comparative Example 1;
FIG. 7 is a structural schematic diagram of the cathode material according to an embodiment of the present application;
FIG. 8 is a TEM photograph of a cathode material in Example 7 of the present application;
FIG. 9 is an SEM photograph of the cathode material in Example 7 of the present application; and
FIG. 10 is a Raman spectrum fitting analysis diagram of the cathode material in Example 7 of the present application.

Explanation of reference numerals in the drawings is as follows:

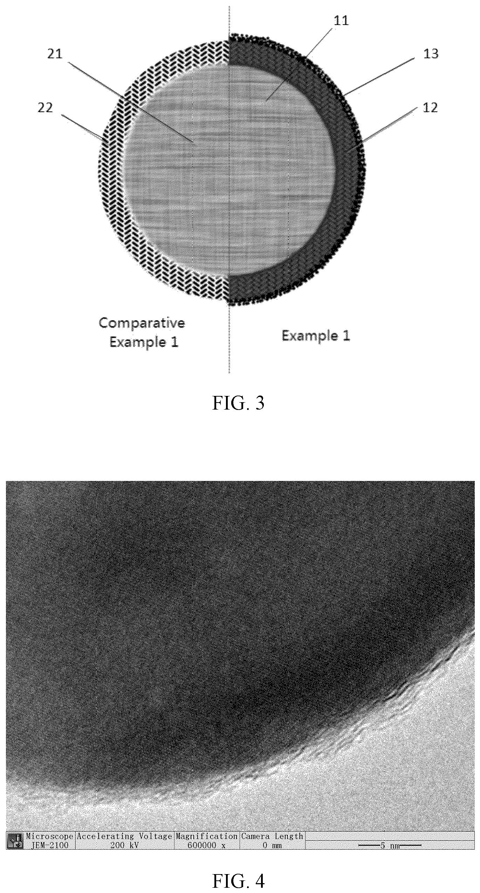

In FIG. 3: 11, core of Example 1; 12, multi-carbon intercalated layer of Example 1; 13, outer carbon layer; 21, core of Comparative Example 1; and 22, carbon coating layer of Comparative Example 1; and

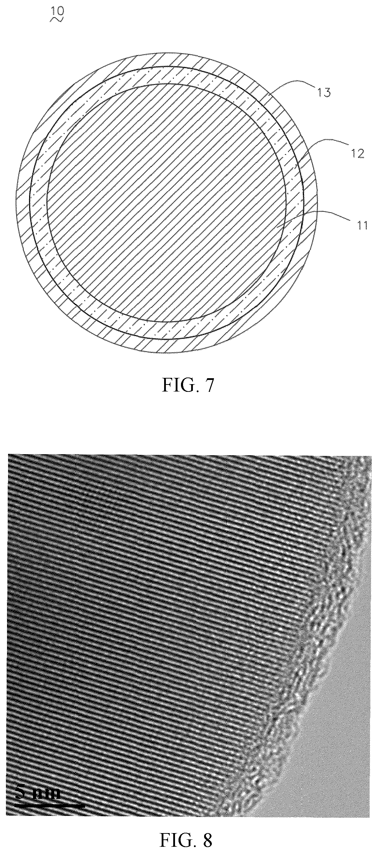

In FIG. 7: 10, cathode material; 11, core; 12, first carbon layer; and 13, second carbon layer.

### DETAILED DESCRIPTION OF THE EMBODIMENTS

In order to make the technical problems, technical solutions, and beneficial effects to be solved by the present application clearer, the following will further detail the present application in conjunction with the drawings and embodiments. It should be understood that the specific embodiments described here are only used to explain the present application and are not intended to limit the present application.

Embodiments of the present application provide a cathode material. The cathode material comprises a core and a first carbon layer. The first carbon layer is a multi-carbon intercalated layer, the multi-carbon intercalated layer comprises a main skeleton carbon and a modified carbon, the main skeleton carbon is bonded to a surface of the core, and the modified carbon grows within the main skeleton carbon in an intercalated manner.

The cathode material provided in embodiments of the present application adopts the multi-carbon intercalated layer (first carbon layer) to coat the core. The multi-carbon intercalated layer comprises the main skeleton carbon and the modified carbon. The main skeleton carbon is bonded to the surface of the core, and the modified carbon grows within the main skeleton carbon in an intercalated manner. **In** this way, the generation of pores is reduced, making the porosity of the multi-carbon intercalated layer lower than the porosity of the existing in-situ carbon coating layer. The pore structure in the multi-carbon intercalated layer is reduced, such that the time for the solvent to infiltrate the pores during the slurry preparation process is shortened, and the volume of solvent required to infiltrate the pores is reduced. This is beneficial to reduce the generation of slurry bubbles, making it easy to prepare a slurry with good rheology and uniformity, thereby reducing a series of problems caused by bubbles and improving the energy density per unit electrode plate.

**In** some embodiments, the main skeleton carbon is formed by high-temperature in-situ pyrolysis of the first carbon source. Carbon in the main skeleton carbon is bonded to the surface of the core in a form of stacked carbon flakes. The modified carbon is formed by in-situ pyrolysis and/or vapor deposition of the second carbon source. The modified carbon is interwoven and intercalated in the main skeleton carbon, and carbon in the modified carbon is in a form of carbon flakes. The first carbon source is different from the second carbon source, and a carbon chain of the first carbon source is longer than a carbon chain of the second carbon source. The first carbon source and the second carbon source are pyrolyzed and intercalated simultaneously. Through the throwing power of the in-situ pyrolysis and/or vapor deposition, the second carbon source enables the multi-carbon intercalated layer to have a reduced overall pore structure compared to in-situ carbon coating alone.

Due to the randomness of in-situ pyrolysis and/or vapor deposition, the carbon structure in the modified carbon has a random arrangement and is stacked mostly in a discontinuous and anisotropic manner. For the carbon structure in the main skeleton carbon, the carbon flakes produced by high-temperature in-situ pyrolysis of the first carbon source are longer, are stacked parallelly on the surface of the core, playing an introduction and supporting role for the modified carbon, which allows the modified carbon formed by in-situ pyrolysis and/or vapor deposition to be better coated on the surface of the core through the main skeleton carbon. The finally interwoven multi-carbon intercalated layer can be completely coated on the core, resulting in a carbon coating layer having a uniform thickness and making the surface of the multi-carbon intercalated layer smooth, with reduced generation of pores.

It can be understood that a length of each of the carbon flakes in the main skeleton carbon is greater than a length of each of the carbon flakes in the modified carbon, which is conducive to the formation of a support structure and the coating of the core, while the shorter carbon flake length in the modified carbon is conducive to the interweaving and intercalation. In some embodiments, the length of each of the carbon flakes in the modified carbon being smaller than 2 nm.

In embodiments of the present application, a pore volume of the multi-carbon intercalated layer can be smaller than 0.07 cm³/g, with a typical value ranging from 0.04 cm³/g to 0.06 cm³/g, which is significantly smaller than a pore volume of the existing in-situ carbon coating layer, which ranges from 0.12 cm³/g to 0.20 cm³/g. A specific surface area of the multi-carbon intercalated layer is also smaller than a specific surface of the existing in-situ carbon coating layer, which can shorten the time required for the solvent to infiltrate the pores.

The typical value in embodiments of the present application refers to an average value or a normal value of a certain performance of the product, representing a parameter with representative characteristics of a group (or a certain subgroup).

In some embodiments, a mass content of the main skeleton carbon accounts for 80 wt.% to 90 wt.% of the multi-carbon intercalated layer, and a mass content of the modified carbon accounts for 10 wt.% to 20 wt.% of the multi-carbon intercalated layer. In other embodiments, the mass content of the main skeleton carbon accounts for 82 wt.% to 91 wt.% of the multi-carbon intercalated layer, and the mass content of the modified carbon accounts for 9 wt.% to 18 wt.% of the multi-carbon intercalated layer. A small proportion of short-structured modified carbon can play a role like particle gradation, facilitating tighter stacking of the multi-carbon intercalated layer. A majority of the thickness of the multi-carbon intercalated layer is contributed by the main skeleton carbon, with the modified carbon serving as auxiliary modification.

In some embodiments, the main skeleton carbon in the multi-carbon intercalated layer is stacked parallelly and seamlessly on the surface of the core, forming a seamless coating, reducing the probability of shedding, and increasing the stability of the cathode material.

In some embodiments, the multi-carbon intercalated layer comprises a carbon element and an intercalated non-carbon element (first non-carbon element). The intercalated non-carbon element comprises at least one of N, S, P, or Li. A mass content of carbon element accounts for 97 wt.% to 98.5 wt.% of the multi-carbon intercalated layer, and a mass content of the intercalated non-carbon element accounts for 1.5 wt.% to 3 wt.% of the multi-carbon intercalated layer. Preferably, a small amount of the non-carbon element is evenly distributed in the multi-carbon intercalated layer. The introduction of the small amount of non-carbon element into the multi-carbon intercalated layer can improve the degree of graphitization of the residual carbon layer to a certain extent, and the increase in sp² carbon is conducive to improving the electronic conductivity of the cathode material.

In some embodiments, the core of the cathode active material is a lithium-containing phosphate-based core. A portion of the carbon in the multi-carbon intercalated layer forms C-P bonds and C-O-P bonds with a portion of the phosphorus in the core. The multi-carbon intercalated layer is in surface contact with the core, forming a seamless coating. The binding energies of C-P bonds and C-O-P bonds are stronger than those of van der Waals bonds produced by the contact surface, which is conducive to improve the bonding strength and bonding stability between the multi-carbon intercalated layer and the core, reducing the probability of peeling-off of the multi-carbon intercalated layer and the outer carbon layer during the processing, the slurry preparation, and the battery cycling use.

When the multi-carbon intercalated layer is formed by the interweaving and intercalation of the main skeleton carbon derived from the high-temperature in-situ pyrolysis of the first carbon source and the modified carbon formed by the high-temperature in-situ pyrolysis and/or vapor deposition of the second carbon source, the probability of formation of the C-P bonds and C-O-P bonds between the carbon in the multi-carbon intercalated layer and the phosphorus in the core can reach 0.5% to 1.15%. The strong bonding strength and high bonding stability between the multi-carbon intercalated layer and the core make it difficult for the multi-carbon intercalated layer and the core to peel off.

Due to the strong bonding strength between the multi-carbon intercalated layer and the core, in some embodiments, the degree of peeling of the multi-carbon intercalated layer is as low as 0.8%.

The definition of the bonding probability in embodiments of the present application refers to the probability that during the preparation of precursors such as lithium manganese iron phosphate, the C-H bonds or the C-O bonds in the solvent for carbon source may be subjected to a coupling reaction with the P-H bonds or the P-O-H bonds in the phosphorus source under the action of a catalyst to form the C-P bonds or the C-O-P bonds, which still exist after the sintering process.

Examples of lithium-containing phosphate-based cores comprise lithium manganese phosphate cores, lithium iron phosphate cores, or lithium manganese iron phosphate cores. In some embodiments, the core is chosen to be a lithium manganese iron phosphate core in an olivine structure, then the cathode material is a carbon-coated lithium manganese iron phosphate cathode material.

In some embodiments, a particle size of the core is smaller than 400 nm, with most cores having particle sizes of 80 nm to 300 nm, and the cores having particle sizes of 80 nm to 300 nm accounting for 70% to 80% of a total number of cores. In other embodiments, the particle size of the core is smaller than 400 nm, with most cores having a particle size of 50 nm to 300 nm, and the cores having the particle size of 50 nm to 300 nm accounting for 70% to 80% of the total number of cores, enabling the preparation of lithium manganese iron phosphate cathode materials in an nano-size.

In some embodiments, the cathode material further comprises a second carbon layer, the second carbon layer is an outer carbon layer, which is coated on an outer surface of the multi-carbon intercalated layer. The combination of the outer carbon layer and the multi-carbon intercalated layer can improve the electronic conductivity of the cathode material, and can also suppress the dissolution of manganese from the core, when the core contains manganese, thus enhancing the cycle life of the cathode material.

In some embodiments, the outer carbon layer (second carbon layer) is formed on the outer surface of the multi-carbon intercalated layer by high-temperature in-situ pyrolysis and/or vapor deposition of the second carbon source, and become a second layer in the carbon coating layer of the cathode material in a direction away from the core, and no macroscopic gaps exist between the outer carbon layer and the multi-carbon intercalated layer.

If the multi-carbon intercalated layer contains carbon formed by the high-temperature pyrolysis of both the first carbon source and the second carbon source, on one hand, when the carbon flakes in the single carbon layer contacts with the carbon flakes in the multi-carbon intercalated layer formed by the pyrolysis of the first carbon source in a manner of point contact or line contact, C-C chemical bonds are formed therebetween, and when the carbon flakes in the outer carbon layer contacts with the carbon flakes in the multi-carbon intercalated layer formed by the pyrolysis of the first carbon source in a manner of surface contact, van der Waals bonds are formed therebetween. On the other hand, the homologous carbon in the outer carbon layer and the multi-carbon intercalated layer form C-C chemical bonds, which creates a "pinning structure", thereby enhancing the bonding strength between the multi-carbon intercalated layer and the outer carbon layer.

In some embodiments, a thickness of the multi-carbon intercalated layer is smaller than 10 nm, with typical values ranging from 3 nm to 6 nm, or 2.8 nm to 5.8 nm. A thickness of the outer carbon layer is smaller than 1.5 nm, with typical values ranging from 0.65 nm to 1.0 nm. The thickness of the outer carbon layer is smaller than or equal to the thickness of the multi-carbon intercalated layer. The outer carbon layer is a thin carbon layer in the carbon coating, like a "film structure". A thicker multi-carbon intercalated layer is conducive to the stability of the overall carbon skeleton, thus it is not prone for the multi-carbon intercalated layer to be damaged during processing or battery cycling use. A thinner outer carbon layer, while ensuring modifying and filling into the multi-carbon intercalated layer, minimally increases the overall thickness of the carbon layer, which is beneficial for shortening the Li⁺ transport path.

The overall thickness of the outer carbon layer is small, and the outer carbon layer is formed by the continuous accumulation of small molecular carbon structures pyrolyzed from the second carbon source. A pore volume of the outer carbon layer can be smaller than 0.020 cm³/g, with typical values ranging from 0.010 cm³/g to 0.014 cm³/g. The reduced pore volume of the outer carbon layer is conducive to the decrease in the specific surface area of the cathode material, reducing the formation of core with bubbles due to solvent infiltration during slurry processing. Moreover, the reduction in pore structure is conducive to decreasing contact between the cathode material and the electrolyte, weakening the interfacial reaction between the cathode material and the electrolyte, thus reducing the erosion of the electrolyte on the cathode material.

In some embodiments, the pore volume of the outer carbon layer is smaller than the pore volume of the multi-carbon intercalated layer. The pores in the outer carbon layer communicate with the pores in the multi-carbon intercalated layer and the outside of the outer carbon layer. The air in the pores of the multi-carbon intercalated layer provides resistance to the infiltration of the solution, increasing the resistance for the solution to enter the pores of the outer carbon layer, and further reducing the likelihood of bubble formation during slurry processing due to solvent infiltration of the cathode material.

In some embodiments, a total pore volume of the cathode material ranges from 0.04 cm³/g to 0.10 cm³/g.

The carbon structure in the outer carbon layer is mostly short carbon flakes. Due to the randomness of in-situ pyrolysis and/or vapor deposition, the carbon structures in the outer carbon layer are also arranged randomly to some degrees, and the carbon structures are accumulated in a discontinuous and anisotropic manner.

When the multi-carbon intercalated layer is seamlessly accumulated on the surface of the core, for example, the tightness between the core and the multi-carbon intercalated layer, the tightness between the multi-carbon intercalated layer and the outer carbon layer, and the tightness uniformity; or the formation of C-P bonds and C-O-P bonds between a portion of the carbon in the multi-carbon intercalated layer and a portion of the phosphorus in the core, and the formation of C-C chemical bonds and/or van der Waals bonds between the carbon flakes in the multi-carbon intercalated layer and the carbon flakes in the outer carbon layer, can further increase the electron conduction rate and improve the electrochemical performance of the cathode material.

In some embodiments, it is understood that the pore volume of the cathode material is smaller than the pore volume of existing in-situ carbon coating layers, and the specific surface area of the cathode material will also be lower than that of existing in-situ carbon coating layers. In some embodiments of the present application, the specific surface area of the cathode material ranges from 12 m²/g to 17.0 m²/g. If the specific surface area of the cathode material is too small, for example, smaller than 12 m²/g, the carbon content may be too low, potentially leading to uneven carbon coating. If the specific surface area of the cathode material is too large, for example, more than 17 m²/g, it may be difficult to disperse the slurry during the slurry preparation process, leading to agglomeration problems that can affect electrical performance. Therefore, when the specific surface area is within the range of 12 m²/g to 17.0 m²/g, particle agglomeration is reduced, which is conducive to the dispersion of active materials and the uniform coating of conductive agents during processing.

The specific surface area in the embodiments of the present application refers to the total area per unit mass of the material, with units being m²/m³ or m²/g, and usually refers to the specific surface area of solid materials, such as powder, fiber, particles, sheets, blocks, etc. The calculation method is area/volume or area/mass.

In some embodiments, as shown in FIG. 7, the degree of graphitization of the second carbon layer 13 is higher than the degree of graphitization of the first carbon layer 12.

The carbon-coated cathode material 10 provided in embodiments of the present application uses the second carbon layer 13 and the first carbon layer 12 to transmit electrons. The degree of graphitization of the second carbon layer 13 is higher than the degree of graphitization of the first carbon layer 12, and the electron migration resistance of the second carbon layer 13 is smaller than that of the first carbon layer 12, which is beneficial to the transfer of electrons from the inner core 11 to the outside, increases the conduction rate of electrons, and thereby improves the electrical properties of the cathode material 10.

When the core contains manganese, the multi-layer carbon structure is conducive to suppress the dissolution of manganese from the core, improving the cycle life of the cathode material.

In some embodiments, most of the carbon structure in the second carbon layer is short carbon flakes. When the second carbon layer is formed by in-situ pyrolysis and/or vapor deposition, the randomness of in-situ pyrolysis and/or vapor deposition leads to a certain randomness in the arrangement of the carbon structures in the second carbon layer. Most carbon structures are accumulated in a discontinuous and anisotropic manner. Although a degree of long-range disorder of the carbon structure in the second carbon layer is lower than a degree of long-range disorder of the carbon structure in the first carbon layer, vapor deposition involves gas-phase mass transfer at the atomic level, which makes the degree of short-range order of the carbon structure in the second carbon layer higher, i.e., the degree of graphitization is higher. If the degree of graphitization is characterized by an I_{G}/I_{D} ratio, in some embodiments, the I_{G}/I_{D} value of the second carbon layer ranges from 1.0 to 1.9, with typical values ranging from 1.2 to 1.6. In some embodiments, the I_{G}/I_{D} value of the cathode material ranges from 0.8 to 1.25.

Therefore, the degree of graphitization of the first carbon layer is higher than that of the in-situ carbon coating layer formed only using the first carbon source. If the degree of graphitization of the first carbon layer is characterized by the I_{G}/I_{D} ratio, the degree of graphitization of the first carbon layer can reach 0.75 to 1.5, with typical values ranging from 0.8 to 1.1. The I_{G}/I_{D} value of the second carbon layer is greater than the I_{G}/I_{D} value of the first carbon layer. The improved degree of graphitization of the first carbon layer facilitates the transfer of electrons from the core outward, while the improved degree of graphitization of the second carbon layer is conducive to increasing the electron conduction rate between the carbon-coated cathode material particles. The electrons in the core migrate from the core through the first carbon layer to the second carbon layer, all of which is conducive to improving the electrochemical performance of the carbon-coated cathode material.

In some embodiments, most of the carbon structure in the first carbon layer is a longer carbon flake structure, which is stacked on the surface of the core; most of the carbon structure in the second carbon layer is a shorter carbon flake structure, which is stacked on a surface of the first carbon layer in a discontinuous and anisotropic manner; and a size of the longer carbon flake structure is greater than a size of the shorter carbon flake structure. In these embodiments, when the first carbon layer is formed by the high-temperature in-situ pyrolysis of the first carbon source and the second carbon layer is formed by in-situ pyrolysis and/or vapor deposition, generally, a carbon chain of the organic matter in the first carbon source are longer than a carbon chain of the organic matter in the second carbon source. The size of the carbon flakes in the carbon structure of the obtained first carbon layer is smaller than a size of the carbon flakes in the carbon structure of the second carbon layer, which is conducive to uniformly coating the outer surface of the core and provides a structural foundation for the growth of the carbon structure in the second carbon layer, and supporting the carbon structure in the second carbon layer.

In some embodiments, the second carbon layer comprises a carbon element and a second non-carbon element (outer non-carbon element), with the carbon content in the second carbon layer ranging from 98% to 99%. The second non-carbon element comprises at least one of N, P, or Li, and is optionally N. The content of the second non-carbon elements in the second carbon layer ranges from 1% to 2%. The introduction of a small amount of non-carbon elements in the second carbon layer can improve the degree of graphitization of the residual carbon layer to a certain degree. The increase in sp² carbon is beneficial for enhancing the electronic conductivity of the carbon-coated cathode material.

It can be understood that the first carbon layer can be a single carbon layer or formed from multiple carbon sources through appropriate processes. It is important to have a difference in the degree of graphitization between the first carbon layer and the second carbon layer, and the degree of graphitization of the second carbon layer is higher than degree of graphitization of the first carbon layer, which enables the electrons in the core to have a tendency to transfer outward.

Embodiments of the present application further provide a preparation method of a cathode material, which can be used to prepare the cathode material in the above embodiments. The preparation method comprises the following steps:
In step S1: a core precursor material is provided, and the core precursor material is performed with a first sintering in an inert atmosphere to obtain the core.

The core is obtained through high-temperature sintering, which provides materials for the subsequent process.

In some embodiments, to obtain cores with suitable particle size and clean surfaces, the core precursor material is subjected to crushing and ball milling before the first sintering.

In some embodiments, the core precursor material can be shaped using a drum-type vacuum ball mill, and a shaping time can be 15 mins to 60 mins, which enables the multi-carbon intercalated layer to be tightly coated on the core, and which is suitable for preparing the cathode material and the cathode plate. The protective atmosphere of the vacuum ball mill can be at least one of hydrogen, nitrogen, or argon.

In some embodiments, an inert atmosphere for the first sintering is either nitrogen or argon.

In some embodiments, a temperature of the first sintering is 350°C to 650°C, and the sintering time of the first sintering can be selected according to actual conditions, such as 2 hrs to 10 hrs.

Alternatively, in some embodiments, the temperature of the first sintering is 355°C to 660°C, and the sintering time of the first sintering can be selected according to actual conditions, such as 2 hrs to 8 hrs.

In some embodiments, the core is a lithium manganese iron phosphate core, and the corresponding core precursor material is a lithium manganese iron phosphate precursor.

In some embodiments, a preparation method of the lithium manganese iron phosphate precursor comprises the following steps:
mixing a lithium source, an iron source, a phosphorus source, a manganese source, a solvent for precursor, and a solubilizer in proportion for carrying out reaction, whereby obtaining the lithium manganese iron phosphate precursor.

In some embodiments, the lithium source, the iron source, the manganese source, and the phosphorus source are configured according to the elemental molar ratio of Li:(Fe+Mn):P = (0.90 to 1.10):(0.90 to 1.10):(0.90 to 1.10), where the molar ratio of Fe:Mn in the iron source and manganese source is 1:(0 to 10), and can be, for example, 1:0, 1:0.1, 1:0.5, 1:0.75, 1:1, 1:2, 1:3, 1:5, 1:7, 1:8, 1:10. The solvent for precursor and the solubilizer are added according to mass percentages based on a total mass of the lithium source, iron source, manganese source, and phosphoric acid being 100 wt.%, with the mass percentage of the solvent for precursor being 150 wt.% to 500 wt.%, and the mass percentage of the solubilizer being no more than 5 wt.%. Alternatively, in some embodiments, the mass percentage of the solvent for precursor is 200 wt.% to 600 wt.%, and the mass percentage of the solubilizer is no more than 6 wt.%.

In some embodiments, the lithium source comprises at least one of lithium carbonate, lithium sulfate, lithium phosphate, or lithium dihydrogen phosphate.

In some embodiments, the manganese source comprises at least one of manganese sulfate, manganese carbonate, manganese acetate, manganese nitrate, manganese chloride, manganese oxide, or manganese hydroxide.

In some embodiments, the iron source comprises at least one of iron chloride, iron carbonate, iron acetate, ferrous acetate, or ferric phosphate.

In some embodiments, the phosphorus source comprises at least one of diammonium hydrogen phosphate, ammonium dihydrogen phosphate, iron phosphate, red phosphorus, white phosphorus, phosphorus pentoxide, phosphorus trioxide, ammonium phosphate, or iron phosphate.

In some embodiments, the solvent for precursor comprises at least one of water, methanol, ethanol, ethylene glycol, glycerol, polyethylene glycol, dimethyl sulfoxide, salicylic acid, hexadecyl trimethyl ammonium bromide, or the like.

In some embodiments, the solubilizer can be at least one of nitric acid, phosphoric acid, ammonium dihydrogen phosphate, acetic acid, oxalic acid, citric acid, ascorbic acid (catalyst), and polyvinylpyrrolidone (anti-agglomerating agent). The solubilizer promotes the dissolution of the components, disperses the mixed slurry, catalyzes the reaction process, regulates the pH of the reaction system, and participates in the formation of the lithium manganese iron phosphate precursor material.

In some embodiments, a mixed solution obtained by mixing the lithium source, the iron source, the phosphorus source, the manganese source, the solvent for precursor, and the solubilizer has a pH value of 5.0 to 7.5, so as to regulate the morphology of the core precursor material and the residual alkali amount after sintering the core precursor material, preventing high pH from causing gelation problems during the processing, which could otherwise affect the evaluation of the processing performance of the cathode material.

The reaction of the lithium source, the iron source, the phosphorus source, the manganese source, the solvent for precursor, and the solubilizer comprises any of a hydrothermal reaction, a co-precipitation reaction, and a sol-gel reaction.

In step S2: the core is mixed with a first carbon source and a solvent for carbon source to obtain a mixed material.

After mixing the core with the first carbon source and the solvent for carbon source, the first carbon source infiltrates the surface of the core. During the second sintering, the high-temperature in-situ pyrolysis produces a carbon structure that attaches to the surface of the core, and in some cases, a portion of the carbon structures chemically bond with the phosphorus in the core.

A mass ratio of the core to the first carbon source can be 1:(4 to 16), and a mass ratio of the core to the solvent for carbon source can be 1:(0.5 to 10). Alternatively, the mass ratio of the core to the first carbon source can be 1:(4 to 18), and the mass ratio of the core to the solvent for carbon source can be 1:(0.4 to 12). The solvent for carbon source is mainly used to dissolve and/or disperse the first carbon source, form a mixed liquid with the first carbon source, and provide a solution environment for the core, so that the mixed liquid can uniformly infiltrate the surface of the core, so as to form a first carbon layer of uniform thickness in the core.

In some embodiments, the first carbon source comprises at least one of hydroxypropyl distarch phosphate, glucose, fructose, sucrose, lactose, stevia, xylose, maltose, starch, cellulose, chitosan, D-glucosamine, glucosamine sulfate, fructose phosphate ester, glucose-6-phosphate, N-acetylglucosamine, peptidoglycan, polyacrylate, polyethylene glycol, citric acid, malic acid, propylene, polypropylene glycol, polypropylene, polyacrylamide, lithium polyacrylate, polyvinyl alcohol, cyclodextrin, polyvinyl butyral, polystyrene, or graphite.

In some embodiments, the core contains phosphorus, and a portion of the phosphorus in the core forms C-P bonds and/or C-O-P bonds with a portion of the carbon in the multi-carbon intercalated layer. The first carbon source comprises a carbohydrate, and the carbohydrate comprises, for example, at least one of glucose, fructose, or sucrose.

In some embodiments, the first carbon source comprises a carbon element and a first non-carbon element. The first non-carbon element comprises at least one of N, S, P, or Li. A mass content of the carbon element accounts for 96 wt.% to 98 wt.% of the first carbon source, and a mass content of the first non-carbon element content accounts for 2 wt.% to 4 wt.% of the first carbon source.

In some embodiments, the solvent for carbon source comprises at least one of water, glycerol, ethanol, ethylene glycol, isopropanol, polyethylene glycol, ethyl acetate, and acetic ether.

S3: the mixed material is performed with a second sintering in an inert atmosphere, while a second carbon source is introduced in an atomized state during the second sintering, so that the first carbon source is pyrolyzed in-situ to form the main skeleton carbon stacked on the surface of the core, the second carbon source is pyrolyzed in-situ to and/or vapor deposited to form the modified carbon, and the modified carbon is interwoven and intercalated into the main skeleton carbon to form the first carbon layer which is the multi-carbon intercalated layer, whereby obtaining the cathode material.

During the second sintering process, both the first carbon source and the second carbon source are subjected to the high-temperature pyrolysis. The carbon structure generated from the pyrolysis of the first carbon source is parallelly accumulated on the surface of the core, forming the main skeleton carbon. The carbon structure generated from the pyrolysis of the second carbon source forms the modified carbon through in-situ pyrolysis and/or vapor deposition, and the modified carbon is interwoven and intercalated in the main skeleton carbon. The main skeleton carbon and the modified carbon together form the multi-carbon intercalated layer.

The second carbon source comprises at least two of methanol, ethanol, ethyl acetate, polyethylene glycol, acetone, butanone, ethyl ether, acetic acid, oxalic acid, polypropylene glycol, aniline, benzylamine, pyrazine, ammonium citrate, ammonium formate, ammonium acetate, formamide, acetamide, propionamide, butyramide, isopropanolamine, N,N-dimethylethanolamine, dimethylethanolamine, or triethylenediamine.

Generally, the first carbon source is selected to be a macromolecular organic compound, while the second carbon source is selected to be a small molecular organic compound, or alternatively, the carbon chain of the first carbon source is longer than the carbon chain of the second carbon source. In this way, the length of the carbon flakes forming the main skeleton carbon is longer and can be parallelly accumulated on the surface of the core. The length of the carbon flakes of the modified carbon is shorter, for example, the maximum value of the length of the carbon flakes of the modified carbon is < 2 nm, such that the carbon flakes of the modified carbon can be interwoven and intercalated in the main skeleton carbon.

In some embodiments, the second carbon source comprises a carbon element and a first non-carbon element. The first non-carbon element can comprise at least one of N, S, P, or Li, optionally N. In these embodiments, the first non-carbon element in the first carbon source and the first non-carbon element in the second carbon source can independently be at least one of N, S, P, or Li. This means that it is not required for the first non-carbon element in the first carbon source to be the same as or different from the first non-carbon element in the second carbon source. The N element in first non-carbon can be introduced from at least one of aniline, benzylamine, para-diazine, ammonium citrate, ammonium formate, ammonium acetate, formamide, acetamide, propionamide, butyramide, isopropanolamine, N,N-dimethylethanolamine, dimethylethanolamine, or triethylenediamine. The mass content of the carbon element in the second carbon source is 98 wt.% to 99 wt.%, and the mass content of the first non-carbon element is 1 wt.% to 2 wt.%.

In some embodiments, at least one of the first carbon source and the second carbon source comprises a carbon element and a first non-carbon element, the first non-carbon element comprises at least one of N, S, P, or Li, a mass content of the carbon element accounts for 97 wt.% to 98.5 wt.% of a total mass of the first carbon source and the second carbon source, and a mass content of the first non-carbon element accounts for 1.5 wt.% to 3 wt.% of the total mass of the first carbon source and the second carbon source.

In some embodiments, the inert atmosphere for the second sintering comprises at least one of hydrogen, nitrogen, or argon.

In some embodiments, a temperature of the second sintering can range from 650°C to 850°C, and a sintering time of the second sintering can be selected based on practical considerations, for example, from 4 hrs to 10 hrs.

Alternatively, in some embodiments, the temperature of the second sintering can range from 660°C to 855°C, and the sintering time of the second sintering can be selected based on practical considerations, for example, from 4 hrs to 12 hrs.

The addition amount of the second carbon source is controlled by the introduction duration and flow rate of the atomizing gas. The introduction duration can range from 4 hrs to 10 hrs, for example, 4 hrs, 5 hrs, 6 hrs, 7 hrs, 8 hrs, 9 hrs, or 10 hrs. The flow rate of the atomizing gas of the second carbon source can be between 10 mL/min and 110 mL/min, optionally between 40 mL/min and 80 mL/min.

The preparation method of the cathode material provided by the present application involves a second high-temperature sintering and the introduction of the second carbon source in the atomized state, which allows the first carbon source to be subjected to the high-temperature in-situ pyrolysis to form the main skeleton carbon, and allows the second carbon source to be subjected to in-situ pyrolysis and/or vapor deposition to form the modified carbon. The modified carbon is intertwoven and intercalated in the main skeleton carbon, forming the first carbon layer, which is a multi-carbon intercalated layer. This effectively reduces pore generation, resulting in a low-porosity multi-carbon intercalated layer with a high degree of graphitization, thereby enhancing the electronic conductivity of the cathode material.

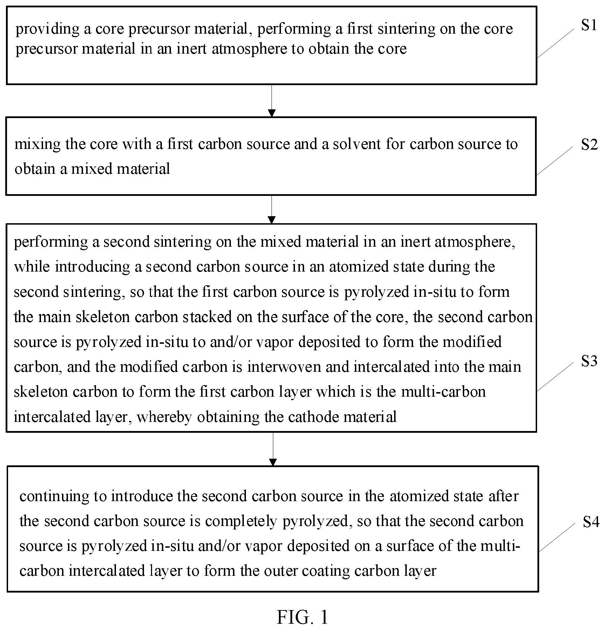

In some embodiments, when the cathode material further comprises a second carbon layer, the second carbon layer is an outer carbon layer. After forming the multi-carbon intercalated layer, as shown in FIG. 1, the preparation further comprises the following step S4:

In step S4: continuing to introduce the second carbon source in the atomized state after the second carbon source is completely pyrolyzed, so that the second carbon source is pyrolyzed in-situ and/or vapor deposited on a surface of the multi-carbon intercalated layer to form the outer coating carbon layer (second carbon layer), thus obtaining the cathode material.

In some embodiments, after the pyrolysis of the second carbon source is completed, the multi-carbon intercalated layer is basically formed, the introduction of the atomized second carbon source is continued while maintaining the temperature of the second sintering. The second carbon source is accumulated on the surface of the multi-carbon intercalated layer through in-situ pyrolysis and/or vapor deposition, so as to form the outer carbon layer. The resulting outer carbon layer has a high degree of graphitization and can improve the electronic conductivity of the cathode material.

In some embodiments, when the first carbon layer is formed by the high-temperature in-situ pyrolysis of the first carbon source and the in-situ pyrolysis and/or vapor deposition of the second carbon source, and the second carbon source used for the first carbon layer is the same as the second carbon source used for the second carbon layer, then, the second carbon source can be continuously introduced during the preparation process, which avoids the complicated operation of multiple replacements of the atomized second carbon source, thus simplifying the process and improving the processing efficiency.

In a specific embodiment, the atomized second carbon source introduced in step S4 can be the same as or different from the atomized second carbon source introduced in step S3. In some embodiments, the atomized second carbon source introduced in step S4 comprises at least two of methanol, ethanol, ethyl acetate, polyethylene glycol, acetone, butanone, ethyl ether, acetic acid, oxalic acid, polypropylene glycol, aniline, benzylamine, pyrazine, ammonium citrate, ammonium formate, ammonium acetate, formamide, acetamide, propionamide, butyramide, isopropanolamine, N,N-dimethylethanolamine, dimethylethanolamine, or triethylenediamine.

In a specific embodiment, the temperature in step S4 can be the same as or different from the temperature of the second sintering in step S3. In some embodiments, the temperature of the in-situ pyrolysis and/or vapor deposition of the atomized second carbon source in step S4 can range from 650°C to 855°C.

The reaction time in step S4 can be estimated based on the amount of the second carbon source added, and the thickness of the outer carbon layer can be controlled by adjusting the flow rate and introduction duration of the atomized second carbon source.

In step S4, the addition amount of the second carbon source is controlled by the introduction duration and flow rate of the atomizing gas, which can range from 4 hrs to 12 hrs, for example, 5 hrs, 5.5 hrs, 6 hrs, 6.5 hrs, 7 hrs, 7.5 hrs, 8 hrs, 8.5 hrs, 9 hrs, 9.5 hrs, 10 hrs, 10.5 hrs, 11 hrs, 11.5 hrs, or 12 hrs. The flow rate of the atomizing gas of the second carbon source can be the same as that in step S3, ranging from 10 mL/min to 110 mL/min, or from 15 mL/min to 120 mL/min, for example, 15 mL/min, 30 mL/min, 45 mL/min, 60 mL/min, 80 mL/min, 85 mL/min, 90 mL/min, 100 mL/min, or 120 mL/min, optionally between 45 and 90 mL/min.

In some embodiments, the atomized second carbon source introduced in step S4 comprises a carbon element and a second non-carbon element, where the second non-carbon element comprises at least one of N, P, or Li; a mass content of carbon element accounts for 98 wt.% to 99 wt.% of the second carbon source, and a mass content of the second non-carbon element accounts for 1 wt.% to 2 wt.% of the second carbon source.

The second carbon source forms the second carbon layer on the surface of the first carbon layer through in-situ pyrolysis and/or vapor deposition, thus two different carbon layers are formed. Vapor deposition, being a gas-phase mass transfer at an atomic level, results in a higher degree of short-range order of the carbon structure in the second carbon layer, i.e., a higher degree of graphitization. This creates a gradient in the degree of graphitization between the first carbon layer and the second carbon layer, guiding the direction of electron transfer within the core and enhancing the electron conduction rate of the cathode material. The preparation method is simple, controllable, and has good industrial application prospects.

The present application also provides a cathode plate made of the above-mentioned cathode material. The cathode material comprises a core, a multi-carbon intercalated layer, and an outer carbon layer. The multi-carbon intercalated layer and the outer carbon layer have low porosities, so that few or even no bubbles are generated in the slurry preparation process, which avoids the problems caused by the bubbles in slurry screening, electrode coating, and electrode drying, and eliminates the problems of uneven electrode thickness, as well as cracks, peeling, and powder shedding of the electrode plate caused by pits or voids due to the bubble bursting, thereby effectively improving the yield rate of cathode plate.

The present application also provides a secondary battery comprising the above-mentioned cathode plate, which does not have issues of uneven thickness, cracks, peeling, and powder shedding, and improves the capacity, internal resistance, cycle life, and safety of the secondary battery.

The present application will be further described hereinbelow by way of a plurality of examples.

### Example 1

As shown in FIG. 3, the cathode material of this example comprises: a core 11, a multi-carbon intercalated layer 12, and an outer carbon layer 13. The multi-carbon intercalated layer 12 comprises a main skeleton carbon and a modified carbon. The main skeleton carbon is stacked on the surface of the core 11, and the modified carbon grows within the main skeleton carbon in an intercalated manner. The outer carbon layer 13 is coated on a surface of the multi-carbon intercalated layer 12.

A mass content of the main skeleton carbon accounts for 85 wt.% of the multi-carbon intercalated layer 12, and a mass content of the modified carbon accounts for 15 wt.% of the multi-carbon intercalated layer. A pore volume of the multi-carbon intercalated layer 12 is 0.0495 cm³/g, a pore volume of the outer carbon layer 13 is 0.0122 cm³/g, and a total pore volume is 0.0472 cm³/g. A thickness of the multi-carbon intercalated layer 12 is 3.14 nm, and a thickness of the outer carbon layer 13 is 0.86 nm. A particle size of the core 11 ranges from 52 nm to 368 nm. A specific surface area of the cathode material is 14.16 m²/g.

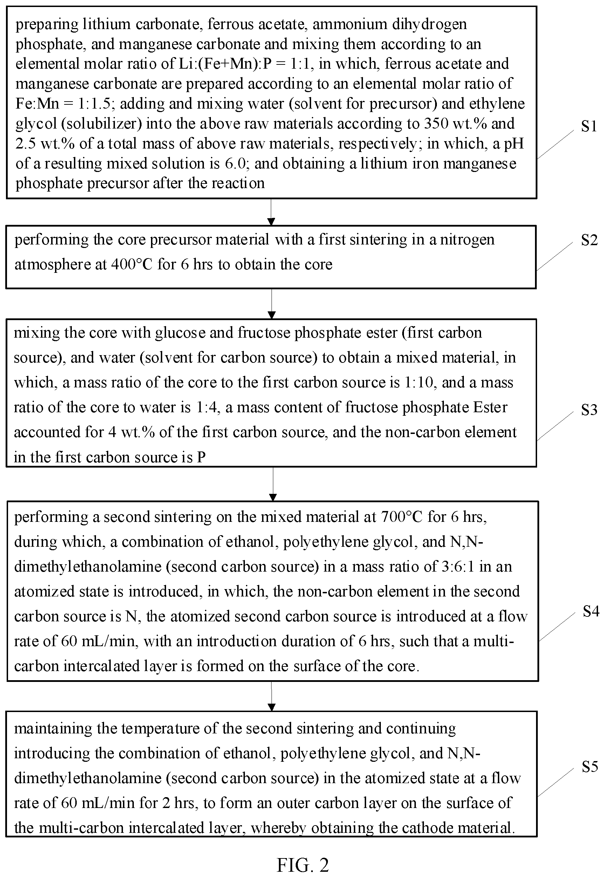

As shown in FIG. 2, the cathode material of this example was prepared by the following steps:
In step S1, lithium carbonate, ferrous acetate, ammonium dihydrogen phosphate, and manganese carbonate were prepared and mixed according to an elemental molar ratio of Li:(Fe+Mn):P = 1:1:1. Ferrous acetate and manganese carbonate were prepared according to an elemental molar ratio of Fe:Mn = 1:1.5. Water (solvent for precursor) and ethylene glycol (solubilizer) were added and mixed into the above raw materials according to 350 wt.% and 2.5 wt.% of a total mass of above raw materials, respectively. A pH of a resulting mixed solution was 6.0. After the reaction, a lithium iron manganese phosphate precursor was obtained.

In step S2, the core precursor material was performed with a first sintering in a nitrogen atmosphere at 400°C for 6 hrs to obtain the core.

In step S3, the core was mixed with glucose and fructose phosphate ester (first carbon source), and water (solvent for carbon source) to obtain a mixed material, in which, a mass ratio of the core to the first carbon source was 1:10, and a mass ratio of the core to water was 1:4. A mass content of fructose phosphate ester accounted for 4 wt.% of the first carbon source, and the non-carbon element in the first carbon source was phosphorus (P).

In step S4, the mixed material was performed with a second sintering at 700°C for 6 hrs, during which, a combination of ethanol, polyethylene glycol, and N,N-dimethylethanolamine (second carbon source) in a mass ratio of 3:6:1 in an atomized state was introduced, in which, the non-carbon element in the second carbon source was nitrogen (N), the atomized second carbon source was introduced at a flow rate of 60 mL/min, with an introduction duration of 6 hrs, such that a multi-carbon intercalated layer was formed on the surface of the core.

In step S5, the temperature of the second sintering was maintained and the combination of ethanol, polyethylene glycol, and N,N-dimethylethanolamine (second carbon source) in the atomized state was continued being introduced at a flow rate of 60 mL/min for 2 hrs, to form an outer carbon layer on the surface of the multi-carbon intercalated layer, whereby obtaining the cathode material.

As shown in FIG. 4, a transmission electron microscope (TEM) image of the obtained cathode material showed that the thicknesses of both the multi-carbon intercalated layer and the outer carbon layer were uniform.

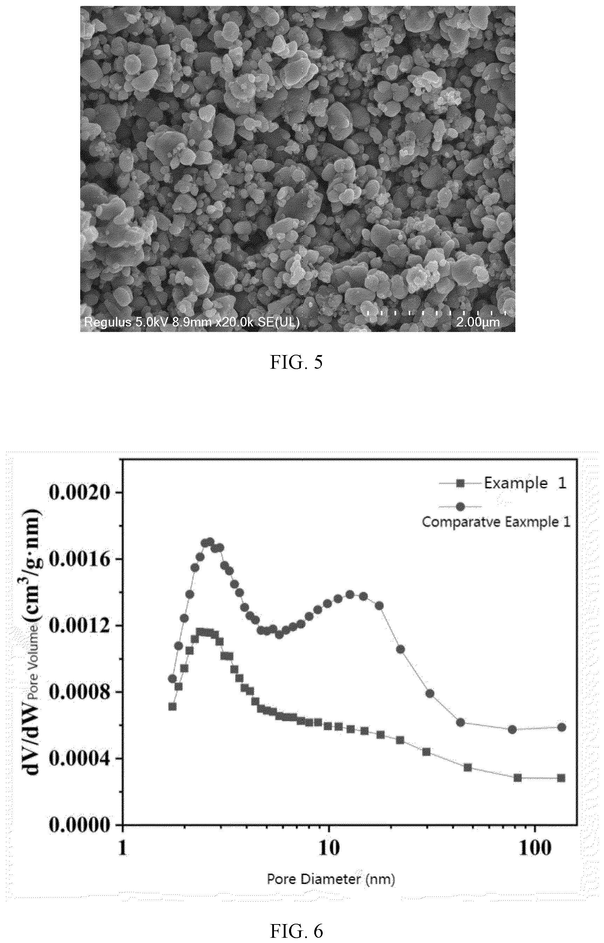

As shown in FIG. 5, a scanning electron microscope (SEM) image of the obtained cathode material showed that the particles of the cathode material are relatively round, with a lower specific surface area, thus being beneficial for processing.

### Example 2

The cathode material in this example is mostly the same as the material structure in Example 1 except the following differences: a mass content of the main skeleton carbon accounts for 90 wt.% of the multi-carbon intercalated layer, and a mass content of the modified carbon accounts for 10 wt.% of the multi-carbon intercalated layer. A pore volume of the multi-carbon intercalated layer is 0.0687 cm³/g, a pore volume of the outer carbon layer is 0.0184 cm³/g, and a total pore volume is 0.0725 cm³/g. A thickness of the multi-carbon intercalated layer is 4.28 nm, and a thickness of the outer carbon layer is 0.98 nm. A particle size of the core ranges from 43 nm to 322 nm. A specific surface area of the cathode material is 16.35 m²/g.

The cathode material of this example was prepared by the following steps:
In step S1, lithium carbonate, ferrous acetate, ammonium dihydrogen phosphate, and manganese carbonate were prepared and mixed according to an elemental molar ratio of Li:(Fe+Mn):P = 1:1:1. Ferrous acetate and manganese carbonate were prepared according to an elemental molar ratio of Fe:Mn = 1:1.5. Water and ethylene glycol were added and mixed into the above raw materials according to 350 wt.% and 2.5 wt.% of a total mass of above raw materials, respectively. A pH of a resulting mixed solution was 6.0. After the reaction, a lithium iron manganese phosphate precursor was obtained.

In step S2, the core precursor material was performed with a first sintering in a nitrogen atmosphere at 400°C for 6 hrs to obtain the core.

In step S3, the core was mixed with sucrose and chitosan (first carbon source) and water to obtain a mixed material, in which, a mass ratio of the core to the first carbon source was 1:14, and a mass ratio of the core to water was 1:4. A mass content of fructose phosphate ester accounted for 4 wt.% of the first carbon source, and the non-carbon element in the first carbon source was N.

In step S4, the mixed material was performed with a second sintering at 750°C for 6 hrs, during which, a combination of acetic acid, polypropylene glycol, and benzylamine (second carbon source) in a mass ratio of 3:6:1 in an atomized state was introduced, in which, the non-carbon element in the second carbon source was N, the atomized second carbon source was introduced at a flow rate of 80 mL/min, with an introduction duration of 6 hrs, such that a multi-carbon intercalated layer was formed on the surface of the core.

In step S5, the temperature of the second sintering was maintained and the combination of acetic acid, polypropylene glycol, and benzylamine (second carbon source) in the atomized state was continued being introduced at a flow rate of 70 mL/min for 2 hrs, to form an outer carbon layer on the surface of the multi-carbon intercalated layer, whereby obtaining the cathode material.

### Example 3

The cathode material in this example is mostly the same as the material structure in Example 1 except the following differences: a mass content of the main skeleton carbon accounts for 90 wt.% of the multi-carbon intercalated layer, and a mass content of the modified carbon accounts for 10 wt.% of the multi-carbon intercalated layer. A pore volume of the multi-carbon intercalated layer is 0.0724 cm³/g, a pore volume of the outer carbon layer is 0.0125 cm³/g, and a total pore volume is 0.0681 cm³/g. A thickness of the multi-carbon intercalated layer is 3.65 nm, and a thickness of the outer carbon layer is 0.8 nm. A particle size of the core ranges from 45 nm to 316 nm. A specific surface area of the cathode material is 15.87 m²/g.

The cathode material of this example was prepared by the following steps:
In step S1, lithium carbonate, ferrous acetate, ammonium dihydrogen phosphate, and manganese carbonate were prepared and mixed according to an elemental molar ratio of Li:(Fe+Mn):P = 1:1:1. Ferrous acetate and manganese carbonate were prepared according to an elemental molar ratio of Fe:Mn = 1:1.5. Water and ethylene glycol were added and mixed into the above raw materials according to 350 wt.% and 2.5 wt.% of a total mass of above raw materials, respectively. A pH of a resulting mixed solution was 6.0. After the reaction, a lithium iron manganese phosphate precursor was obtained.

In step S2, the lithium iron manganese phosphate precursor was performed with a first sintering in a nitrogen atmosphere at 400°C for 6 hrs to obtain the core.

In step S3, the core was mixed with glucose and fructose phosphate ester (first carbon source), and water to obtain a mixed material, in which, a mass ratio of the core to the first carbon source was 1:14, and a mass ratio of the core to water was 1:4. A mass content of fructose phosphate ester accounted for 4 wt.% of the first carbon source, and the non-carbon element in the first carbon source was P.

In step S4, the mixed material was performed with a second sintering at 750°C for 6 hrs, during which, a combination of ethanol, polyethylene glycol, and N,N-dimethylethanolamine (second carbon source) in a mass ratio of 3:6:1 in an atomized state was introduced, in which, the non-carbon element in the second carbon source was N, the atomized second carbon source was introduced at a flow rate of 60 mL/min, with an introduction duration of 6 hrs, such that a multi-carbon intercalated layer was formed on the surface of the core.

In step S5, the temperature of the second sintering was maintained and the combination of ethanol, polyethylene glycol, and N,N-dimethylethanolamine (second carbon source) in the atomized state was continued being introduced at a flow rate of 80 mL/min for 2 hrs, to form an outer carbon layer on the surface of the multi-carbon intercalated layer, whereby obtaining the cathode material.

### Example 4

The cathode material in this example is mostly the same as the material structure in Example 1 except the following differences: a mass content of the main skeleton carbon accounts for 85 wt.% of the multi-carbon intercalated layer, and a mass content of the modified carbon accounts for 15 wt.% of the multi-carbon intercalated layer. A pore volume of the multi-carbon intercalated layer is 0.0513 cm³/g, a pore volume of the outer carbon layer is 0.0267 cm³/g, and a total pore volume is 0.0604 cm³/g. A thickness of the multi-carbon intercalated layer is 3.22 nm, and a thickness of the outer carbon layer is 1.26 nm. A particle size of the core ranges from 60 nm to 350 nm. A specific surface area of the cathode material is 15.28 m²/g.

The cathode material of this example was prepared by the following steps:
In step S1, lithium carbonate, ferrous acetate, ammonium dihydrogen phosphate, and manganese carbonate were prepared and mixed according to an elemental molar ratio of Li:(Fe+Mn):P = 1:1:1. Ferrous acetate and manganese carbonate were prepared according to an elemental molar ratio of Fe:Mn = 1:1.5. Water and ethylene glycol were added and mixed into the above raw materials according to 350 wt.% and 2.5 wt.% of a total mass of above raw materials, respectively. A pH of a resulting mixed solution was 6.0. After the reaction, a lithium iron manganese phosphate precursor was obtained.

In step S2, the core precursor material was performed with a first sintering in a nitrogen atmosphere at 400°C for 6 hrs to obtain the core.

In step S3, the core was mixed with glucose and fructose phosphate ester (first carbon source), and water to obtain a mixed material, in which, a mass ratio of the core to the first carbon source was 1:10, and a mass ratio of the core to water was 1:4. A mass content of fructose phosphate ester accounted for 4 wt.% of the first carbon source, and the non-carbon element in the first carbon source was P.

In step S4, the mixed material was performed with a second sintering at 750°C for 6 hrs, during which, a combination of ethanol, polyethylene glycol, and N,N-dimethylethanolamine (second carbon source) in a mass ratio of 3:6:1 in an atomized state was introduced, in which, the non-carbon element in the second carbon source was N, the atomized second carbon source was introduced at a flow rate of 60 mL/min, with an introduction duration of 6 hrs, such that a multi-carbon intercalated layer was formed on the surface of the core.

In step S5, the temperature of the second sintering was maintained and the combination of ethanol, polyethylene glycol, and N,N-dimethylethanolamine (second carbon source) in the atomized state was continued being introduced at a flow rate of 80 mL/min for 2 hrs, to form an outer carbon layer on the surface of the multi-carbon intercalated layer, whereby obtaining the cathode material.

### Example 5

The cathode material in this example is mostly the same as the material structure in Example 1 except the following differences: a mass content of the main skeleton carbon accounts for 85 wt.% of the multi-carbon intercalated layer, and a mass content of the modified carbon accounts for 15 wt.% of the multi-carbon intercalated layer. A pore volume of the multi-carbon intercalated layer is 0.0506 cm³/g, a pore volume of the outer carbon layer is 0.0131 cm³/g, and a total pore volume is 0.0490 cm³/g. A thickness of the multi-carbon intercalated layer is 3.20 nm, and a thickness of the outer carbon layer is 0.90 nm. A particle size of the core ranges from 54 nm to 355 nm. A specific surface area of the cathode material is 14.52 m²/g.

The cathode material of this example was prepared by the following steps:
In step S1, lithium carbonate, ferrous acetate, ammonium dihydrogen phosphate, and manganese carbonate were prepared and mixed according to an elemental molar ratio of Li:(Fe+Mn):P = 1:1:1. Ferrous acetate and manganese carbonate were prepared according to an elemental molar ratio of Fe:Mn = 1:1.5. Water and ethylene glycol were added and mixed into the above raw materials according to 350 wt.% and 2.5 wt.% of a total mass of above raw materials, respectively. A pH of a resulting mixed solution was 6.0. After the reaction, a lithium iron manganese phosphate precursor was obtained.

In step S2, the core precursor material was performed with a first sintering in a nitrogen atmosphere at 400°C for 6 hrs to obtain the core.

In step S3, the core was mixed with glucose (first carbon source) and water (solvent for carbon source) to obtain a mixed material, in which, a mass ratio of the core to the first carbon source was 1:10, and a mass ratio of the core to water was 1:4.

In step S4, the mixed material was performed with a second sintering at 700°C for 6 hrs, during which, a combination of ethanol and polyethylene glycol (second carbon source) in a mass ratio of 3:7 in an atomized state was introduced, in which, the atomized second carbon source was introduced at a flow rate of 60 mL/min, with an introduction duration of 6 hrs, such that a multi-carbon intercalated layer was formed on the surface of the core.

In step S5, the temperature of the second sintering was maintained and the combination of ethanol and polyethylene glycol (second carbon source) in the atomized state was continued being introduced at a flow rate of 60 mL/min for 2 hrs, to form an outer carbon layer on the surface of the multi-carbon intercalated layer, whereby obtaining the cathode material.

### Example 6

The cathode material in this example is mostly the same as the material structure in Example 1 except the following differences: a mass content of the main skeleton carbon accounts for 85 wt.% of the multi-carbon intercalated layer, and a mass content of the modified carbon accounts for 15 wt.% of the multi-carbon intercalated layer. A pore volume of the multi-carbon intercalated layer is 0.0498 cm³/g, and a total pore volume is 0.0498 cm³/g. A thickness of the multi-carbon intercalated layer is 3.06 nm, no outer carbon layer is provided. A particle size of the core ranges from 62 nm to 384 nm. A specific surface area of the cathode material is 14.76 m²/g.

The cathode material of this example was prepared by the following steps:
In step S1, lithium carbonate, ferrous acetate, ammonium dihydrogen phosphate, and manganese carbonate were prepared and mixed according to an elemental molar ratio of Li:(Fe+Mn):P = 1:1:1. Ferrous acetate and manganese carbonate were prepared according to an elemental molar ratio of Fe:Mn = 1:1.5. Water and ethylene glycol were added and mixed into the above raw materials according to 350 wt.% and 2.5 wt.% of a total mass of above raw materials, respectively. A pH of a resulting mixed solution was 6.0. After the reaction, a lithium iron manganese phosphate precursor was obtained.

In step S2, the core precursor material was performed with a first sintering in a nitrogen atmosphere at 400°C for 6 hrs to obtain the core.

In step S3, the core was mixed with glucose and fructose phosphate ester (first carbon source), and water to obtain a mixed material, in which, a mass ratio of the core to the first carbon source was 1:10, and a mass ratio of the core to water was 1:4. A mass content of fructose phosphate ester accounted for 4 wt.% of the first carbon source, and the non-carbon element in the first carbon source was P.

In step S4, the mixed material was performed with a second sintering at 700°C for 8 hrs, during which, a combination of ethanol, polyethylene glycol, and N,N-dimethylethanolamine (second carbon source) in a mass ratio of 3:6:1 in an atomized state was introduced, in which, the non-carbon element in the second carbon source was N, the atomized second carbon source was introduced at a flow rate of 60 mL/min, with an introduction duration of 6 hrs, such that a multi-carbon intercalated layer was formed on the surface of the core.

### Example 7

The cathode material in this example comprises: a core part (that is, the core), a first carbon layer, and a second carbon layer. The first carbon layer is bonded to a surface of the core part, and the second carbon layer is coated on a surface of the first carbon layer. A degree of graphitization of the second carbon layer is higher than a degree of graphitization of the first carbon layer. A thickness of the first carbon layer is 3.26 nm, and a thickness of the second carbon layer is 0.90 nm. A particle size of the core is 54 nm to 376 nm. An I_{G}/I_{D} value of the first carbon layer is 1.05, an I_{G}/I_{D} value of the second carbon layer is 1.32, and an I_{G}/I_{D} value of the cathode material is 1.14.

The cathode material of this example was prepared by the following steps:
In step S1, lithium carbonate, iron phosphate, ammonium dihydrogen phosphate, and manganese acetate were prepared and mixed according to an elemental molar ratio of Li:(Fe+Mn):P = 1:1:1. Iron phosphate and manganese acetate were prepared according to an elemental molar ratio of Fe:Mn = 1:1.5. Water as a solvent for precursor and citric acid as a solubilizer were added and mixed into the above raw materials according to 400 wt.% and 3.0 wt.% of a total mass of above raw materials, respectively. A pH of a resulting mixed solution was 6.0. After the reaction, a lithium iron manganese phosphate precursor was obtained.

In step S2, the core part precursor material was performed with a first sintering in a nitrogen atmosphere at 420°C for 5.5 hrs to obtain the core part.

In step S3, the core part was mixed with lactose and hydroxypropyl distarch phosphate as a first carbon source, and water as a solvent for carbon source to obtain a mixed material, in which, a mass ratio of the core part to the first carbon source was 1:12, and a mass ratio of the core part to the solvent for carbon source was 1:5. A mass content of hydroxypropyl distarch phosphate accounted for 5 wt.% of the first carbon source, and the non-carbon element in the first carbon source was P.

In step S4, the mixed material was performed with a second sintering at 720°C for 7 hrs, during which, a combination of butanone, polyethylene glycol, and ammonium formate as a second carbon source in a mass ratio of 3.2:5.8:1 in an atomized state was introduced, in which, the non-carbon element in the second carbon source was N, the atomized second carbon source was introduced at a flow rate of 65 mL/min, with an introduction duration of 7 hrs, such that the first carbon layer was formed on the surface of the core part.

In step S5, the temperature of the second sintering was maintained and the combination of butanone, polyethylene glycol, and ammonium formate in the atomized state was continued being introduced at a flow rate of 65 mL/min for 2.5 hrs, to form the second carbon layer on the surface of the first carbon layer, whereby obtaining the cathode material.

### Example 8

The cathode material in this example comprises: a core part (that is, the core), a first carbon layer, and a second carbon layer. The first carbon layer is bonded to a surface of the core part, and the second carbon layer is coated on a surface of the first carbon layer. A degree of graphitization of the second carbon layer is higher than a degree of graphitization of the first carbon layer. A thickness of the first carbon layer is 4.12 nm, and a thickness of the second carbon layer is 0.97 nm. A particle size of the core is 40 nm to 342 nm. An I_{G}/I_{D} value of the first carbon layer is 0.90, an I_{G}/I_{D} value of the second carbon layer is 1.12, and an I_{G}/I_{D} value of the cathode material is 0.97.

The cathode material of this example was prepared by the following steps:
In step S1, lithium carbonate, iron phosphate, ammonium dihydrogen phosphate, and manganese acetate were prepared and mixed according to an elemental molar ratio of Li:(Fe+Mn):P = 1:1:1. Iron phosphate and manganese acetate were prepared according to an elemental molar ratio of Fe:Mn = 1:1.5. Water as a solvent for precursor and citric acid as a solubilizer were added and mixed into the above raw materials according to 400 wt.% and 3.0 wt.% of a total mass of above raw materials, respectively. A pH of a resulting mixed solution was 6.0. After the reaction, a lithium iron manganese phosphate precursor was obtained.

In step S2, the core part precursor material was performed with a first sintering in a nitrogen atmosphere at 420°C for 5.5 hrs to obtain the core part.

In step S3, the core part was mixed with fructose and D-glucosamine as a first carbon source, and water as a solvent for carbon source to obtain a mixed material, in which, a mass ratio of the core part to the first carbon source was 1:16, and a mass ratio of the core part to the solvent for carbon source was 1:5. A mass content of D-glucosamine accounted for 5 wt.% of the first carbon source, and the non-carbon element in the first carbon source was N.

In step S4, the mixed material was performed with a second sintering at 670°C for 7 hrs, during which, a combination of methanol, polypropylene glycol, and aniline as a second carbon source in a mass ratio of 3.2:5.8:1 in an atomized state was introduced, in which, the non-carbon element in the second carbon source was N, the atomized second carbon source was introduced at a flow rate of 95 mL/min, with an introduction duration of 7 hrs, such that the first carbon layer was formed on the surface of the core part.

In step S5, the temperature of the second sintering was maintained and the combination of methanol, polypropylene glycol, and aniline in the atomized state was continued being introduced at a flow rate of 95 mL/min for 2.5 hrs, to form the second carbon layer on the surface of the first carbon layer, whereby obtaining the cathode material.

### Example 9

The cathode material in this example comprises: a core part (that is, the core), a first carbon layer, and a second carbon layer. The first carbon layer is bonded to a surface of the core part, and the second carbon layer is coated on a surface of the first carbon layer. A degree of graphitization of the second carbon layer is higher than a degree of graphitization of the first carbon layer. A thickness of the first carbon layer is 3.42 nm, and a thickness of the second carbon layer is 0.86 nm. A particle size of the core is 78 nm to 546 nm. An I_{G}/I_{D} value of the first carbon layer is 1.10, an I_{G}/I_{D} value of the second carbon layer is 1.38. The first carbon layer comprises a carbon element and a first non-carbon element, the first non-carbon element comprises element P. A mass content of carbon accounts for 98.48 wt.% of the first carbon layer, and a mass content of the first non-carbon element accounts for 1.52 wt.% of the first carbon layer.

The cathode material of this example was prepared by the following steps:
In step S1, lithium carbonate, iron phosphate, ammonium dihydrogen phosphate, and manganese acetate were prepared and mixed according to an elemental molar ratio of Li:(Fe+Mn):P = 1:1:1. Iron phosphate and manganese acetate were prepared according to an elemental molar ratio of Fe:Mn = 1:1.5. Water as a solvent for precursor and citric acid as a solubilizer were added and mixed into the above raw materials according to 400 wt.% and 3.0 wt.% of a total mass of above raw materials, respectively. A pH of a resulting mixed solution was 6.0. After the reaction, a lithium iron manganese phosphate precursor was obtained.

In step S2, the core part precursor material was performed with a first sintering in a nitrogen atmosphere at 420°C for 5.5 hrs to obtain the core part.

In step S3, the core part was mixed with lactose and hydroxypropyl distarch phosphate as a first carbon source, and water as a solvent for carbon source to obtain a mixed material, in which, a mass ratio of the core part to the first carbon source was 1:16, and a mass ratio of the core part to the solvent for carbon source was 1:5. A mass content of hydroxypropyl distarch phosphate accounted for 5 wt.% of the first carbon source, and the non-carbon element in the first carbon source was P.

In step S4, the mixed material was performed with a second sintering at 800°C for 7 hrs, during which, a combination of butanone, polyethylene glycol, and ammonium formate as a second carbon source in a mass ratio of 3.2:5.8:1 in an atomized state was introduced, in which, the non-carbon element in the second carbon source was N, the atomized second carbon source was introduced at a flow rate of 95 mL/min, with an introduction duration of 7 hrs, such that the first carbon layer was formed on the surface of the core part.

In step S5, the temperature of the second sintering was maintained and the combination of butanone, polyethylene glycol, and ammonium formate in the atomized state was continued being introduced at a flow rate of 95 mL/min for 2.5 hrs, to form the second carbon layer on the surface of the first carbon layer, whereby obtaining the cathode material.

### Example 10

The cathode material in this example comprises: a core part (that is, the core), a first carbon layer, and a second carbon layer. A thickness of the first carbon layer is 3.08 nm, and a thickness of the second carbon layer is 0.77 nm. A particle size of the core is 60 nm to 454 nm. An I_{G}/I_{D} value of the first carbon layer is 0.94, an I_{G}/I_{D} value of the second carbon layer is 1.14. The degree of graphitization of the cathode material is 1.02.

The cathode material of this example was prepared by the following steps:
In step S1, lithium carbonate, iron phosphate, ammonium dihydrogen phosphate, and manganese acetate were prepared and mixed according to an elemental molar ratio of Li:(Fe+Mn):P = 1:1:1. Iron phosphate and manganese acetate were prepared according to an elemental molar ratio of Fe:Mn = 1:1.5. Water as a solvent for precursor and citric acid as a solubilizer were added and mixed into the above raw materials according to 400 wt.% and 3.0 wt.% of a total mass of above raw materials, respectively. A pH of a resulting mixed solution was 6.0. After the reaction, a lithium iron manganese phosphate precursor was obtained.

In step S2, the core part precursor material was performed with a first sintering in a nitrogen atmosphere at 420°C for 5.5 hrs to obtain the core part.

In step S3, the core part was mixed with lactose and hydroxypropyl distarch phosphate as a first carbon source, and water as a solvent for carbon source to obtain a mixed material, in which, a mass ratio of the core part to the first carbon source was 1:8, and a mass ratio of the core part to the solvent for carbon source was 1:5. A mass content of hydroxypropyl distarch phosphate accounted for 5 wt.% of the first carbon source, and the non-carbon element in the first carbon source was P.

In step S4, the mixed material was performed with a second sintering at 670°C for 7 hrs, during which, a combination of butanone, polyethylene glycol, and ammonium formate as a second carbon source in a mass ratio of 3.2:5.8:1 in an atomized state was introduced, in which, the non-carbon element in the second carbon source was N, the atomized second carbon source was introduced at a flow rate of 35 mL/min, with an introduction duration of 7 hrs, such that the first carbon layer was formed on the surface of the core part.

In step S5, the temperature of the second sintering was maintained and the combination of butanone, polyethylene glycol, and ammonium formate in the atomized state was continued being introduced at a flow rate of 35 mL/min for 2.5 hrs, to form the second carbon layer on the surface of the first carbon layer, whereby obtaining the cathode material.

### Example 11

The cathode material in this example comprises: a core part (that is, the core), a first carbon layer, and a second carbon layer. The second carbon layer is coated on a surface of the first carbon layer. A degree of graphitization of the second carbon layer is higher than a degree of graphitization of the first carbon layer. A thickness of the first carbon layer is 3.32 nm, and a thickness of the second carbon layer is 0.92 nm. A particle size of the core is 58 nm to 365 nm. An I_{G}/I_{D} value of the first carbon layer is 1.01, an I_{G}/I_{D} value of the second carbon layer is 1.23. The degree of graphitization of the cathode material is 1.08.

The cathode material of this example was prepared by the following steps:
In step S1, lithium carbonate, iron phosphate, ammonium dihydrogen phosphate, and manganese acetate were prepared and mixed according to an elemental molar ratio of Li:(Fe+Mn):P = 1:1:1. Iron phosphate and manganese acetate were prepared according to an elemental molar ratio of Fe:Mn = 1:1.5. Water as a solvent for precursor and citric acid as a solubilizer were added and mixed into the above raw materials according to 400 wt.% and 3.0 wt.% of a total mass of above raw materials, respectively. A pH of a resulting mixed solution was 6.0. After the reaction, a lithium iron manganese phosphate precursor was obtained.

In step S2, the core part precursor material was performed with a first sintering in a nitrogen atmosphere at 420°C for 5.5 hrs to obtain the core part.

In step S3, the core part was mixed with fructose as a first carbon source and water as a solvent for carbon source to obtain a mixed material, in which, a mass ratio of the core part to the first carbon source was 1:12, and a mass ratio of the core part to the solvent for carbon source was 1:5.

In step S4, the mixed material was performed with a second sintering at 720°C for 7 hrs, during which, a combination of butanone and polyethylene glycol as a second carbon source in a mass ratio of 3.2:6.8 in an atomized state was introduced, in which, the atomized second carbon source was introduced at a flow rate of 65 mL/min, with an introduction duration of 7 hrs, such that the first carbon layer was formed on the surface of the core part.

In step S5, the temperature of the second sintering was maintained and the combination of butanone and polyethylene glycol in the atomized state was continued being introduced at a flow rate of 65 mL/min for 2.5 hrs, to form the second carbon layer on the surface of the first carbon layer, whereby obtaining the cathode material.

### Example 12

The cathode material in this example comprises: a core (that is, core part), a multi-carbon intercalated layer (first carbon layer), and an outer carbon layer (second carbon layer). The first carbon layer comprises a main skeleton carbon and a modified carbon. The main skeleton carbon is accumulated on a surface of the core and the modified carbon grows in the main skeleton carbon in an intercalated manner. The second carbon layer is coated on a surface of the first carbon layer. A degree of graphitization of the second carbon layer is higher than a degree of graphitization of the first carbon layer. The first carbon layer has a thickness of 3.20 nm, and the second carbon layer has a thickness of 0.90 nm. The core has a particle size of 50 nm to 372 nm. An I_{G}/I_{D} value of the first carbon layer is 1.06, an I_{G}/I_{D} value of the second carbon layer is 1.32, and an I_{G}/I_{D} value of the cathode material is 1.13.

The cathode material of this example was prepared by the following steps:
In step S1, lithium carbonate, ferrous acetate, ammonium dihydrogen phosphate, and manganese carbonate were prepared and mixed according to an elemental molar ratio of Li:(Fe+Mn):P = 1:1:1. Ferrous acetate and manganese carbonate were prepared according to an elemental molar ratio of Fe:Mn = 1:1.5. Water (solvent for precursor) and ethylene glycol (solubilizer) were added and mixed into the above raw materials according to 350 wt.% and 2.5 wt.% of a total mass of above raw materials, respectively. A pH of a resulting mixed solution was 6.0. After the reaction, a lithium iron manganese phosphate precursor was obtained.

In step S2, the core precursor material was performed with a first sintering in a nitrogen atmosphere at 400°C for 6 hrs to obtain the core.

In step S3, the core was mixed with glucose and fructose phosphate ester (first carbon source), and water (solvent for carbon source) to obtain a mixed material, in which, a mass ratio of the core to the first carbon source was 1:10, and a mass ratio of the core to water was 1:4. A mass content of fructose phosphate ester accounted for 4 wt.% of the first carbon source, and the non-carbon element in the first carbon source was P.

In step S4, the mixed material was performed with a second sintering at 720°C for 7 hrs, during which, a combination of butanone, polyethylene glycol, and ammonium formate as a second carbon source in a mass ratio of 3.2:5.8:1 in an atomized state was introduced, in which, the non-carbon element in the second carbon source was N, the atomized second carbon source was introduced at a flow rate of 65 mL/min, with an introduction duration of 7 hrs, such that the first carbon layer was formed on the surface of the core part.

In step S5, the temperature of the second sintering was maintained and the combination of butanone, polyethylene glycol, and ammonium formate in the atomized state was continued being introduced at a flow rate of 65 mL/min for 2.5 hrs, to form the second carbon layer on the surface of the first carbon layer, whereby obtaining the cathode material.

### Comparative Example 1

As shown in FIG. 3, the cathode material in this comparative example comprises a core 21 and a carbon coating layer 22 coated on a surface of the core 21. The carbon coating layer 22 has a total pore volume of 0.137 cm³/g and a thickness of 3.10 nm. The core 21 has a particle size of 64 nm to 395 nm. The specific surface area of the cathode material is 17.85 m²/g.

The cathode material of this example was prepared by the following steps:
In step S1, lithium carbonate, ferrous acetate, ammonium dihydrogen phosphate, and manganese carbonate were prepared and mixed according to an elemental molar ratio of Li:(Fe+Mn):P = 1:1:1. Ferrous acetate and manganese carbonate were prepared according to an elemental molar ratio of Fe:Mn = 1:1.5. Water and ethylene glycol were added and mixed into the above raw materials according to 350 wt.% and 2.5 wt.% of a total mass of above raw materials, respectively. A pH of a resulting mixed solution was 6.0. After the reaction, a lithium iron manganese phosphate precursor was obtained.

In step S2, the core precursor material was performed with a first sintering in a nitrogen atmosphere at 400°C for 6 hrs to obtain the core.

In step S3, the core was mixed with glucose and fructose phosphate ester (first carbon source), and water to obtain a mixed material, in which, a mass ratio of the core to the first carbon source was 1:10, and a mass ratio of the core to water was 1:4. A mass content of fructose phosphate ester accounted for 4 wt.% of the first carbon source, and the non-carbon element in the first carbon source was P.

In step S4, the mixed material was performed with a second sintering at 700°C for 6 hrs to obtain a cathode material.

### Comparative Example 2

The cathode material in this comparative example comprises a core and a first carbon layer. The first carbon layer is accumulated on a surface of the core. The first carbon layer has a thickness of 3.25 nm. The core has a particle size of 62 nm to 408 nm. An I_{G}/I_{D} value of the first carbon layer is 1.05, and an I_{G}/I_{D} value of the cathode material is 1.04.

The cathode material of this example was prepared by the following steps:
In step S1, lithium carbonate, iron phosphate, ammonium dihydrogen phosphate, and manganese acetate were prepared and mixed according to an elemental molar ratio of Li:(Fe+Mn):P = 1:1:1. Iron phosphate and manganese acetate were prepared according to an elemental molar ratio of Fe:Mn = 1:1.5. Water as a solvent for precursor and citric acid as a solubilizer were added and mixed into the above raw materials according to 400 wt.% and 3.0 wt.% of a total mass of above raw materials, respectively. A pH of a resulting mixed solution was 6.0. After the reaction, a lithium iron manganese phosphate precursor was obtained.

In step S2, the core part precursor material was performed with a first sintering in a nitrogen atmosphere at 420°C for 5.5 hrs to obtain the core part.

In step S3, the core part was mixed with lactose and hydroxypropyl distarch phosphate as a first carbon source, and water as a solvent for carbon source to obtain a mixed material, in which, a mass ratio of the core part to the first carbon source was 1:12, and a mass ratio of the core part to the solvent for carbon source was 1:5. A mass content of hydroxypropyl distarch phosphate accounted for 5 wt.% of the first carbon source, and the non-carbon element in the first carbon source was P.

In step S4, the mixed material was performed with a second sintering at 720°C for 9.5 hrs, during which, a combination of butanone, polyethylene glycol, and ammonium formate as a second carbon source in a mass ratio of 3.2:5.8:1 in an atomized state was introduced, in which, the non-carbon element in the second carbon source was N, the atomized second carbon source was introduced at a flow rate of 65 mL/min, with an introduction duration of 7 hrs, such that the first carbon layer was formed on the surface of the core part.

### Comparative Example 3

This comparative example provides a cathode material that comprises: a core, a first carbon layer, and a second carbon layer. The first carbon layer is accumulated on a surface of the core, and the second carbon layer is coated on a surface of the first carbon layer. A degree of graphitization of the second carbon layer is higher than a degree of graphitization of the first carbon layer. A thickness of the first carbon layer is 3.12 nm, a particle size of the core is 65 nm to 465 nm, and the I_{G}/I_{D} value of the cathode material is 0.69.

The cathode material of this example was prepared by the following steps:
In step S1, lithium carbonate, iron phosphate, ammonium dihydrogen phosphate, and manganese acetate were prepared and mixed according to an elemental molar ratio of Li:(Fe+Mn):P = 1:1:1. Iron phosphate and manganese acetate were prepared according to an elemental molar ratio of Fe:Mn = 1:1.5. Water as a solvent for precursor and citric acid as a solubilizer were added and mixed into the above raw materials according to 400 wt.% and 3.0 wt.% of a total mass of above raw materials, respectively. A pH of a resulting mixed solution was 6.0. After the reaction, a lithium iron manganese phosphate precursor was obtained.

In step S2, the core part precursor material was performed with a first sintering in a nitrogen atmosphere at 420°C for 5.5 hrs to obtain the core part.

In step S3, the core part was mixed with lactose and hydroxypropyl distarch phosphate as a first carbon source, and water as a solvent for carbon source to obtain a mixed material, in which, a mass ratio of the core part to the first carbon source was 1:15, and a mass ratio of the core part to the solvent for carbon source was 1:5. A mass content of hydroxypropyl distarch phosphate accounted for 5 wt.% of the first carbon source, and the non-carbon element in the first carbon source was P.

In step S4, the mixed material was performed with a second sintering at 720°C for9.5 hrs to obtain a cathode material.

### Comparative Example 4

This comparative example provides a cathode material that comprises: a core, a first carbon layer, and a second carbon layer. The first carbon layer is accumulated on a surface of the core, and the second carbon layer is coated on a surface of the first carbon layer. A degree of graphitization of the second carbon layer is higher than a degree of graphitization of the first carbon layer. A thickness of the first carbon layer is 3.17 nm, a thickness of the second carbon layer is 1.05 nm, and a particle size of the core is 52 nm to 403 nm. An I_{G}/I_{D} value of the first carbon layer is 1.08, an I_{G}/I_{D} value of the second carbon layer is 1.02, and an I_{G}/I_{D} value of the cathode material is 1.05.

The cathode material of this example was prepared by the following steps:
In step S1, lithium carbonate, iron phosphate, ammonium dihydrogen phosphate, and manganese acetate were prepared and mixed according to an elemental molar ratio of Li:(Fe+Mn):P = 1:1:1. Iron phosphate and manganese acetate were prepared according to an elemental molar ratio of Fe:Mn = 1:1.5. Water as a solvent for precursor and citric acid as a solubilizer were added and mixed into the above raw materials according to 400 wt.% and 3.0 wt.% of a total mass of above raw materials, respectively. A pH of a resulting mixed solution was 6.0. After the reaction, a lithium iron manganese phosphate precursor was obtained.

In step S2, the core part precursor material was performed with a first sintering in a nitrogen atmosphere at 420°C for 5.5 hrs to obtain the core part.

In step S3, the core part was mixed with lactose and hydroxypropyl distarch phosphate as a first carbon source, and water as a solvent for carbon source to obtain a mixed material, in which, a mass ratio of the core part to the first carbon source was 1:12, and a mass ratio of the core part to the solvent for carbon source was 1:5. A mass content of hydroxypropyl distarch phosphate accounted for 5 wt.% of the first carbon source, and the non-carbon element in the first carbon source was P.

In step S4, the mixed material was performed with a second sintering at 720°C for 7 hrs, during which, a combination of butanone, polyethylene glycol, and ammonium formate as a second carbon source in a mass ratio of 3.2:5.8:1 in an atomized state was introduced, in which, the non-carbon element in the second carbon source was N, the atomized second carbon source was introduced at a flow rate of 65 mL/min, with an introduction duration of 7 hrs, such that the first carbon layer was formed on the surface of the core part.

In step S5, the temperature of the second sintering was decreased to 670°C, and butanone and polyethylene glycol in the atomized state was continued to be introduced at a flow rate of 65 mL/min for 4 hrs, to form the second carbon layer on the surface of the first carbon layer, whereby obtaining the cathode material.

### Experiments on Performance Testing

### Testing Methods for Cathode Materials:

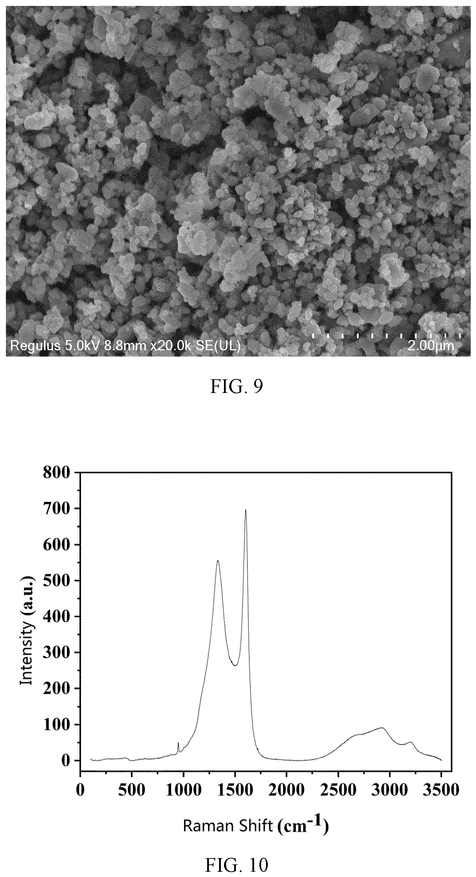

1. Thickness of carbon layer: a transmission electron microscope (TEM) was adopted to image the carbon layers of the cathode material. The thicknesses of the carbon layers were measured using an Image J software. Results for Examples 1-6 and Comparative Example 1 were shown in Table 1, and results for Examples 7-12 and Comparative Examples 2-4 were shown in Table 2. TEM images of Example 7 were shown in FIG. 8.
2. Particle size of core: a scanning electron microscope (SEM) was used to image the carbon layers of the cathode material. A primary particle size was measured using the Image J software. Results for Examples 1-6 and Comparative Example 1 were shown in Table 1, and results for Examples 7-12 and Comparative Examples 2-4 were shown in Table 2. An SEM image of the core part (core) for Example 7 was shown in FIG. 9.
3. Pore volume of carbon layer: the pore volume of the carbon layers of the cathode material was tested using static nitrogen adsorption. 2 g to 3 g of the sample was collected and placed in a U-shaped sample tube, and heated and degased under vacuum then immersed in liquid nitrogen. As a powder surface tends to absorb the nitrogen, an absorption pressure and a gas volume absorbed by the powder surface can be measured to determine data including the pore volume and the pore size distribution. The pore volume and pore size distribution of the cathode material in Example 1 and the cathode material in Comparative Example 1 were shown in FIG. 6. Specifically, results of the pore volume and pore size distribution of the cathode materials in Examples 1-6 and Comparative Example 1 were listed in Table 1.
4. Specific surface area: the static nitrogen adsorption was adopted for testing. 2 g to 3 g of the sample was collected and placed in a U-shaped sample tube, and heated and degased under vacuum, then immersed in liquid nitrogen. As a powder surface tends to absorb the nitrogen, an absorption pressure and a gas volume absorbed by the powder surface was measured to determine the specific surface area of the sample. Test results of the cathode materials in Examples 1-6 and Comparative Example 1 were listed in Table 1.
5. Powder Resistivity: the powder resistivity of the cathode material was measured using an automated powder resistivity tester, with a sample mass of 0.5000 g to 0.5050 g, a testing pressure of 8 MPa, a holding time of 5 seconds. The powder resistivity reflected an external conductivity of the material and can indirectly show the electronic transport capability and coating uniformity of the carbon coating layer of the cathode material. Results for Examples 7-12 and Comparative Examples 2-4 were shown in Table 2.
6. Carbon Content: a carbon content of the cathode material was tested by using a carbon-sulfur analyzer. A sample mass was approximately 0.1 g and a solubilizer was 1.5 g. Results for Examples 7-12 and Comparative Examples 2-4 were shown in Table 2.
7. Degree of Graphitization: the carbon spectrum of the carbon layers of the cathode material (including the first carbon layer and the total carbon layer of the cathode material, the second carbon layer was tested separately using a ceramic sheet) was tested using Raman spectroscopy. The scanning range was 3500 cm⁻¹ to 100 cm⁻¹, and the laser wavelength was 532 nm. The Raman scattering was sensitive to shift symmetry in the carbon structure. Carbon materials with graphite structures exhibited D (Defect) and G (Graphite) peaks in their Raman spectra. The D peak was around 1350 cm⁻¹, representing defective graphite layers, while the G peak was around 1580 cm⁻¹, representing complete graphite layers. Both D and G peaks were related to sp² hybridized carbon. A PeakFit software was used to fit the peak of the Raman spectra, such that the sp² hybridized carbon peaks and the disordered sp³ hybridized carbon peaks can be separated. The degree of graphitization was represented by the I_{G}/I_{D} ratio; a higher ratio indicated a higher degree of graphitization. Raman spectra fitting analysis for Example 7 was shown in FIG. 10. Results of the Raman spectra fitting analysis for Examples 7-12 and Comparative Examples 2-4 were listed in Table 2.

Assembling of the Secondary battery and testing method for charge/discharge capacity:
1. Cathode plate:
   a cathode slurry was prepared by mixing NMP, lithium manganese iron phosphate cathode material, Super P, and PVDF in a mass ratio of 100:93:2:3. The mixing was done by ball milling for 120 mins at a rotational speed of 30 Hz. After homogenization, coating, drying, and cutting, the cathode plates were obtained. The cathode plates were baked in a vacuum oven at 100°C for 12 hrs to a constant weight.
2. Anode plate: a metallic lithium plate was adopted.
3. Separator: a polyethylene (PE) separator was adopted.
4. Electrolyte: the electrolyte was a 1 mol/L LiPF₆ solution, with the solvent composed of ethylene carbonate (EC) and diethyl carbonate (DEC) in a volume ratio of 1:1.
5. Assembling of secondary battery: on a center position of the anode shell, the lithium plate, the separator, the cathode plate, the gasket, the elastic member, and the cathode shell were sequentially placed. A suitable amount of the electrolyte was dropped onto the separator for wetting. After the assembling, a button cell packaging machine was used to pack the battery, whereby obtaining a button cell. The button cell was stood for 12 hrs, before carrying out the electrochemical performance tests.
6. Testing method for the cathode slurry: the battery was placed at 25°C±2°C and smaller than 2% RH to measure the 0.1C discharge specific capacity of a simulated battery using a battery charge/discharge tester according to the specification of operations. Results were shown in Tables 1 and 2.

Preparation method of the full-electric cathode slurry and observation of slurry bubbles: a vacuum stirrer was used for preparing the cathode slurry, a wet mixing method was employed. After the slurry preparation was complete, image capture was used to record the presence of bubbles in the slurry. The results were listed in Table 1. Table 1 included the physicochemical parameters of the cathode materials, charge-discharge capacities, and the bubble formation during slurry preparation.

**Table 1**

| Cathode Material | Specif ic Surfac e Area (m²/g) | Total Pore Volum e (cm³/g ) | Pore Volume (cm³/g) of Multi-carbon Intercal ated Layer | Pore Volume (cm³/g) of Outer Coated Carbon Layer | Thick ness (nm) of Multi -carbo n Interc alated Layer | Thick ness (nm)o f Outer Coate d Carbo n Layer | Particle Size Range (nm) of Core | 0.1C Charg ing Capac ity per gram (mAh /g) | 0.1C Disch argin g Capac ity per gram (mAh /g) | Bubble Situation in Slurry |
|---|---|---|---|---|---|---|---|---|---|---|
| Exampl e 1 | 14.16 | 0.047 2 | 0.0495 | 0.0122 | 3.14 | 0.86 | 52~368 | 158.4 | 156.8 | No bubbles |
| Exampl e 2 | 16.25 | 0.071 5 | 0.0687 | 0.0184 | 4.28 | 0.98 | 43~322 | 155.8 | 153.4 | A small amount of bubbles |
| Exampl e 3 | 15.87 | 0.068 1 | 0.0724 | 0.0125 | 3.95 | 0.8 | 45~316 | 155.7 | 153.8 | A small amount of bubbles |
| Exampl e 4 | 15.28 | 0.060 4 | 0.0513 | 0.0267 | 3.22 | 1.26 | 60~350 | 156.5 | 154.6 | No bubbles |
| Exampl e 5 | 14.52 | 0.049 | 0.0506 | 0.0131 | 3.2 | 0.9 | 54~355 | 155.3 | 153 | No bubbles |
| Exampl e 6 | 14.76 | 0.049 8 | 0.0498 | / | 3.06 | / | 68~384 | 154.5 | 151.1 | No bubbles |
| Compar ative Exampl e 1 | 17.85 | 0.137 | / | / | 2.97 | 2.97 | 64~395 | 152.1 | 148.5 | Relatively abundant bubbles |

From the data in Table 1, it can be known that the phosphate cathode material prepared in Example 1 of the present application has lowest specific surface area and total pore volume while ensuring an optimal 0.1C charge/discharge capacity per gram, and the subsequently prepared cathode slurry has no bubbles, which is due to the modification and filling effect of the modified carbon with the small pore volume formed by in-situ pyrolysis and/or vapor deposition. In Example 2, the types and the dosages of the first carbon source and the second carbon source and sintering conditions were changed, and the prepared cathode material of Example 2, when compared with the prepared cathode material of Example 1, showed increased specific surface area and pore volume, and decreased electrical performance. The subsequently prepared cathode slurry had a small amount of bubbles.

When the dosage of the first carbon source in step S3 and the dosage of the second carbon source in step S5 were changed to prepare the cathode materials in Example 3 and Example 4, the thickness of the multi-carbon intercalated layer and the thickness of the outer carbon layer correspondingly were increased, both the specific surface area and total pore volume were increased, and the electrical performance slightly was decreased. However, only the cathode slurry prepared from the cathode material in Example 3 had bubbles, while the cathode slurry from Example 4 had no bubbles. Furthermore, the geometric characteristics and electrical performance of the cathode material in Example 4 were better than those in Example 3. This indicated that the modified carbon formed by in-situ pyrolysis and/or vapor deposition of the second carbon source had fewer pore structures and superior electronic conductivity.

The multi-carbon intercalated layer and the outer carbon layer of the cathode material in Example 5 did not contain non-carbon elements. The cathode material of Example 5, when compared with that of Example 1, had slightly greater pore volumes and specific surface, but slightly worse electrical performance. This indicated that the introduction of non-carbon elements into the carbon layer can make the carbon layer denser and improve the electronic conductivity of the cathode material, which may be related to an increase in the degree of graphitization of the carbon layer.

The carbon layer of the cathode material in Example 6 only included the multi-carbon intercalated layer. The cathode material in Example had relatively small total pore volume, and the prepared slurry also had no bubbles, but its electrical performance was poorer. This indicated that the outer carbon layer enhanced the electronic conductivity of the cathode material, which was related to the higher degree of graphitization and further modification of the particle surface of the multi-carbon intercalated layer.

The cathode material in Comparative Example 1 was only subjected to in-situ carbon coating, resulting in the worst overall performance, and the prepared cathode slurry also had many bubbles. A comparison of the particle geometric characteristics, electrical performance, and slurry bubble situations between the cathode materials in Examples and Comparative Examples showed that the cathode material prepared in the present application, with a multi-carbon intercalated layer and an outer carbon layer, can reduce the porosity in the carbon layer, effectively lower the specific surface area of the material, improve the electrical performance of the material, and ultimately eliminate or reduce bubbles in the slurry.

**Table 2**

| Catho de Mater ial | Car bon Con tent (%) | Resis tivity ( Ω· cm) | Thickne ss ( nm) of First Carbon Layer | Thickne ss ( nm) of Second Carbon Layer | I_{G}/I_{D} of First Carbon Layer | I_{G}/I_{D} of Second Carbon Layer | I_{G}/I_{D} of Cathod e Materi al | Particle Size Range (nm) of Core | 0.1C Charging Capacity per gram (mAh/g) | 0.1C Discharg ing Capacity per gram (mAh/g) |
|---|---|---|---|---|---|---|---|---|---|---|
| Exam ple 7 | 1.46 | 34.8 | 3.26 | 0.9 | 1.08 | 1.32 | 1.14 | 54~376 | 159.2 | 156.9 |
| Exam ple 8 | 1.98 | 536.4 | 4.12 | 0.97 | 0.90 | 1.12 | 0.97 | 40~342 | 154.6 | 152.2 |
| Exam ple 9 | 1.64 | 23.6 | 3.42 | 0.86 | 1.10 | 1.38 | 1.21 | 78~546 | 152.1 | 149.4 |
| Exam ple 10 | 1.02 | 324.4 | 3.08 | 0.57 | 0.94 | 1.14 | 1.02 | 60-454 | 154.8 | 152.6 |
| Exam ple 11 | 1.53 | 168.2 | 3.23 | 0.92 | 1.01 | 1.23 | 1.08 | 58~365 | 155.6 | 153.4 |
| Exam ple 12 | 1.42 | 40.3 | 3.20 | 0.9 | 1.06 | 1.32 | 1.13 | 50~372 | 158.8 | 156.5 |
| Comp arativ e Exam ple 2 | 1.35 | 247.5 | 3.25 | / | 1.04 | / | 1.04 | 62-408 | 156.2 | 153.8 |
| Comp arativ e Exam ple 3 | 1.42 | 1268. 5 | 4.02 | | 0.69 | | | 65-475 | 150.1 | 147.9 |
| Comp arativ e Exam ple 4 | 1.57 | 205.7 | 3.17 | 1.05 | 1.06 | 1.01 | 1.05 | 52-403 | 154.3 | 152.7 |

Table 2 listed the physical and chemical parameters and the degrees of graphitization of carbon layers in cathode materials of Examples 7-12 and Comparative Examples 2-4. Combined with data from Table 1, it can be known that the phosphate cathode material prepared in Example 7 of the present application had a moderate carbon content. All the first carbon layer, the second carbon layer, and the overall carbon coating layer of the cathode material, exhibited high degrees of graphitization, the electrical resistivity was relatively small, the primary particle size range was relatively small, and the 0.1C charge/discharge capacity per gram was the highest, which indicated optimal comprehensive performance.

Compared with Example 7, cathode materials of other Examples were analyzed in terms of their physical and chemical indicators, degrees of graphitization, and electrical performances, and the following conclusions were made:
In steps S3 to S5 in Example 8, types of the first carbon source and the second carbon source were changed, the dosages of the carbon sources were increased, and the temperature of the second sintering was reduced, such that the prepared cathode material has increased carbon content but decreased degree of graphitization, increased electrical resistivity, and minimal primary particle size, but decreased electrical performance. This indicated that excessive carbon content and excessive thickness made the lithium ion deintercalation more difficult, and reduced sintering temperature adversely affected the degree of graphitization, which was not conducive to the inter-layer electronic conductivity.

When the dosages of the first carbon source and the second carbon source were increased and the temperature of the second sintering was increased in steps S3 to S5 in Example 9, the obtained cathode material has increased carbon content, highest degree of graphitization, and lowest resistivity, but poorest electrical performance, which may be due to significantly increased primary particle size after the increase in the sintering temperature, resulting in longer diffusion distance of the lithium ions in the crystals and poorer material kinetics.

When the dosages of the first carbon source and the second carbon source were reduced and the temperature of the second sintering was reduced in steps S3 to S5 in Example 10, the obtained cathode material has reduced carbon content, smaller thicknesses of the carbon layers, reduced degrees of graphitization, increased resistivity, and poorer electrical performance. This indicated that insufficient carbon source dosages made it difficult to form a good carbon coating conductive network, and the decreased sintering temperature made it difficult for the carbon layers to form more graphite layer structures, resulting in decreased electrical performance.

The cathode material of Example 11 does not contain the non-carbon element in either of the first carbon layer or the second carbon layer. Compared with Example 7, the cathode material of Example 11 has similar carbon content and thicknesses of carbon layers, but the degrees of the graphitization of the two carbon layers were both decreased, and the resistivity were correspondingly increased, and the electrical performance was decreased. This indicated that non-carbon elements contained both the first carbon source and the second carbon source facilitated the formation of more complete graphite layer structures.

In steps S1 to S3 in Example 12, the type of first carbon source was changed, the dosages of the first carbon source was increased, and the temperature of the first sintering was reduced, such that the prepared cathode material has decreased carbon content, smaller thicknesses of the carbon layers, slightly decreased degree of graphitization, and increased electrical resistivity, but these changes remain relatively close to those in Example 7, and the electrical performance is relatively good. This indicated that when the dosage of the carbon source and the sintering temperature were close to those in Example 7, cathode materials having good electrical performance can still be obtained even if the type of carbon source was changed.

The cathode material of Comparative Example 2 only had the first carbon layer but no second carbon layer arranged outside the core, the carbon content and the thicknesses of the carbon layers were correspondingly reduced, the degrees of graphitization of the carbon layers were reduced, the resistivity were increased, and the electrical performance was decreased. This indicated that the second carbon layer, as the carbon layer having a higher degree of graphitization, can effectively improve the overall electronic conductivity of the cathode material and partially inhibit crystal growth during the sintering process, thus enhancing the kinetic properties of the cathode material.

The cathode material in Comparative Example 3 was only subjected to in-situ coating, resulting in the worst degree of graphitization of the carbon layer and worst electrical performance. In Comparative Example 4, during the coating of the second carbon layer, the proportion of the second carbon source was adjusted, and the sintering temperature was decreased, and the second carbon layer contained no non-carbon elements, such that the second carbon layer has a lower degree of graphitization compared to the first carbon layer, and the electrical performance of the cathode material was lower than that of Example 7 and similar to Comparative Example 2. This indicated that if the degree of graphitization of the carbon layers formed a spatial distribution trend that increased from the first carbon layer to the second carbon layer (from inside to outside), it was conducive to achieving the optimal external electronic conductivity of the cathode material particles. Conversely, if the degree of graphitization formed a spatial distribution trend that increases from outside to inside, it resembled a layer of low-conductivity carbon coating over a high-conductivity carbon layer, this may hinder the surface electron transport of the cathode material, leading to a decrease in electrical performance.

In summary, the cathode materials prepared in examples of the present application comprise: a core part (core), a first carbon layer, and a second carbon layer. The first carbon layer is bonded to a surface of the core part, and the second carbon layer is coated on the first carbon layer. The degree of graphitization of the second carbon layer is higher than that of the first carbon layer. This is conducive to improving the surface electron transmission capability of cathode material, reducing inter-particle resistance, and enhancing the electrical performance of the cathode material.

The above description is only preferred embodiments of the present application and should not be used to limit the scope of the present application. Any modifications, equivalent substitutions, or improvements made within the spirit and principles of the present application should be included within the protection scope of the present application.

## Claims

1. A cathode material, **characterized by** comprising a core and a first carbon layer, wherein the first carbon layer is a multi-carbon intercalated layer, the multi-carbon intercalated layer comprises a main skeleton carbon and a modified carbon, the main skeleton carbon is bonded to a surface of the core, and the modified carbon grows within the main skeleton carbon in an intercalated manner.

2. The cathode material according to claim 1, wherein
carbon in the main skeleton carbon is bonded to the surface of the core in a form of stacked carbon flakes; and/or,
carbon in the modified carbon is intercalated into the main skeleton carbon in a form of carbon flakes; and/or,
a mass content of the main skeleton carbon accounts for 80 wt.% to 90 wt.% of the multi-carbon intercalated layer, and a mass content of the modified carbon accounts for 10 wt.% to 20 wt.% of the multi-carbon intercalated layer.

3. The cathode material according to claim 1 or 2, wherein
a length of each of the carbon flakes in the main skeleton carbon is greater than a length of each of the carbon flakes in the modified carbon, with the length of each of the carbon flakes in the modified carbon being smaller than 2 nm; and/or,
a pore volume of the multi-carbon intercalated layer is smaller than 0.070 cm³/g; and/or,
a thickness of the multi-carbon intercalated layer is smaller than 10 nm; and/or,
an I_{G}/I_{D} value of the first carbon layer is 0.75 to 1.5.

4. The cathode material according to any of claims 1-3, wherein the multi-carbon intercalated layer comprises a carbon element and a first non-carbon element; wherein
the first non-carbon element comprises at least one of N, S, P, or Li; and/or,
a mass content of the carbon element accounts for 97 wt.% to 98.5 wt.% of the first carbon layer, and a mass content of the first non-carbon element accounts for 1.5 wt.% to 3 wt.% of the first carbon layer.

5. The cathode material according to any of claims 1-4, wherein the cathode material further comprises a second carbon layer, the second carbon layer is an outer carbon layer, which is coated on an outer surface of the multi-carbon intercalated layer.

6. The cathode material according to claim 5, wherein
a pore volume of the outer carbon layer is smaller than 0.020 cm³/g; and/or,
a thickness of the outer carbon layer is smaller than 1.5 nm, and the thickness of the outer carbon layer is smaller than a thickness of the multi-carbon intercalated layer.

7. The cathode material according to claim 5 or 6, wherein a degree of graphitization of the second carbon layer is higher than a degree of graphitization of the first carbon layer.

8. The cathode material according to any of claims 5-7, wherein a degree of long-range disorder of a carbon structure in the first carbon layer is higher than a degree of long-range disorder of a carbon structure in the second carbon layer.

9. The cathode material according to any of claims 5-8, wherein most of the carbon structure in the first carbon layer is a longer carbon flake structure, which is stacked on the surface of the core; most of the carbon structure in the second carbon layer is a shorter carbon flake structure, which is stacked on a surface of the first carbon layer in a discontinuous and anisotropic manner; and a size of the longer carbon flake structure is greater than a size of the shorter carbon flake structure.

10. The cathode material according to any of claims 5-9, wherein the second carbon layer comprises a carbon element and a second non-carbon element;
wherein
the second non-carbon element comprises at least one of N, P, or Li; and/or,
a mass content of the carbon element accounts for 98 wt.% to 99 wt.% of the second carbon layer, and a mass content of the second non-carbon element accounts for 1 wt.% to 2 wt.% of the second carbon layer.

11. The cathode material according to any of claims 5-10, wherein an I_{G}/I_{D} value of the second carbon layer is 1.0 to 1.9.

12. The cathode material according to any of claims 1-11, wherein the core contains phosphorus, and a portion of the phosphorus in the core forms C-P bonds and/or C-O-P bonds with a portion of the carbon in the multi-carbon intercalated layer.

13. The cathode material according to claim 12, wherein a bonding probability of the C-P bonds and C-O-P bonds is 0.5% to 1.15%.

14. The cathode material according to any of claims 1-13, wherein the core is a lithium-containing phosphate-based cathode active material core; and/or,
a particle size of the core is smaller than 400 nm.

15. The cathode material according to any of claims 1-14, wherein a total pore volume of the cathode material is 0.04 cm³/g to 0.10 cm³/g; and/or,
a specific surface area of the cathode material is 12.0 m²/g to 17.0 m²/g; and/or,
an I_{G}/I_{D} value of the cathode material is 0.8 to 1.25.

16. A preparation method of a cathode material, used for preparing the cathode material according to any one of claims 1 to 15, **characterized in that** the preparation method comprises the following steps:
providing a core precursor material, performing a first sintering on the core precursor material in an inert atmosphere to obtain the core;
mixing the core with a first carbon source and a solvent for carbon source to obtain a mixed material; and
performing a second sintering on the mixed material in an inert atmosphere, while introducing a second carbon source in an atomized state during the second sintering, so that the first carbon source is pyrolyzed in-situ to form the main skeleton carbon stacked on the surface of the core, the second carbon source is pyrolyzed in-situ to and/or vapor deposited to form the modified carbon, and the modified carbon is interwoven and intercalated into the main skeleton carbon to form the first carbon layer which is the multi-carbon intercalated layer, whereby obtaining the cathode material.

17. The preparation method of the cathode material according to claim 16, wherein the core precursor material is a lithium manganese iron phosphate precursor, and a preparation method of the lithium manganese iron phosphate precursor comprises the following step:
mixing a lithium source, an iron source, a phosphorus source, a manganese source, a solvent for precursor, and a solubilizer in proportion for carrying out reaction, whereby obtaining the lithium manganese iron phosphate precursor.

18. The preparation method of the cathode material according to claim 17, wherein a mixed solution obtained by mixing the lithium source, the iron source, the phosphorus source, the manganese source, the solvent for precursor, and the solubilizer has a pH value of 5.0 to 7.5.

19. The preparation method of the cathode material according to any of claims 16-18, wherein the first carbon source comprises at least one of hydroxypropyl distarch phosphate, glucose, fructose, sucrose, lactose, stevia, xylose, maltose, starch, cellulose, chitosan, D-glucosamine, glucosamine sulfate, fructose phosphate ester, glucose-6-phosphate, N-acetylglucosamine, peptidoglycan, polyacrylate, polyethylene glycol, citric acid, malic acid, propylene, polypropylene glycol, polypropylene, polyacrylamide, lithium polyacrylate, polyvinyl alcohol, cyclodextrin, polyvinyl butyral, polystyrene, or graphite; and/or,
the second carbon source comprises at least two of methanol, ethanol, ethyl acetate, polyethylene glycol, acetone, butanone, ethyl ether, acetic acid, oxalic acid, polypropylene glycol, aniline, benzylamine, pyrazine, ammonium citrate, ammonium formate, ammonium acetate, formamide, acetamide, propionamide, butyramide, isopropanolamine, N,N-dimethylethanolamine, dimethylethanolamine, or triethylenediamine.

20. The preparation method of the cathode material according to any of claims 16-19, wherein at least one of the first carbon source and the second carbon source comprises a carbon element and a first non-carbon element, the first non-carbon element comprises at least one of N, S, P, or Li, a mass content of the carbon element accounts for 97 wt.% to 98.5 wt.% of a total mass of the first carbon source and the second carbon source, and a mass content of the first non-carbon element accounts for 1.5 wt.% to 3 wt.% of the total mass of the first carbon source and the second carbon source.

21. The preparation method of the cathode material according to any of claims 16-20, wherein the cathode material further comprises a second carbon layer, the second carbon layer is an outer carbon layer, and after forming the multi-carbon intercalated layer, the method further comprises the following step:
continuing to introduce the second carbon source in the atomized state after the second carbon source is completely pyrolyzed, so that the second carbon source is pyrolyzed in-situ and/or vapor deposited on a surface of the multi-carbon intercalated layer to form the outer coating carbon layer.

22. The preparation method of the cathode material according to any of claims 16-21, wherein the preparation method satisfies at least one of the following conditions (1) to (4):
(1) a temperature of the first sintering is 350°C to 660°C;
(2) a temperature of the second sintering is 650°Cto 855°C;
(3) a flow rate of the second carbon source in the atomized state is 10 mL/min to 120 mL/min; or
(4) a second carbon source comprises a carbon element and a second non-carbon element, where the second non-carbon element comprises at least one of N, P, or Li; a mass content of carbon element accounts for 98 wt.% to 99 wt.% of the second carbon source, and a mass content of the second non-carbon element accounts for 1 wt.% to 2 wt.% of the second carbon source.

23. A cathode plate, **characterized by** being made of the cathode material according to any of claims 1 to 16 or the cathode material prepared by the method according to any of claims 17 to 22.

24. A secondary battery, **characterized by** comprising the cathode plate according to claim 23.
